# EUROPEAN PATENT SPECIFICATION

(11) **EP 4 494 815 B1**
(45) Date of publication and mention of the grant of the patent: **21.10.2026**
(21) Application number: 24189038.3
(22) Date of filing: 17.07.2024
(51) Int. Cl.: B25B 21/02, B25B 23/147

(54) **IMPACT TOOL**
SCHLAGWERKZEUG
OUTIL D'IMPACT

(30) Priority: 18.07.2023 CN 202321886188 U; 07.09.2023 CN 202311154926; 03.11.2023 CN 202311460745
(43) Date of publication of application: 22.01.2025
(73) Proprietor: Nanjing Chervon Industry Co., Ltd., Nanjing, Jiangsu 211106 (CN)
(72) Inventor: SUN, Chenwei, Nanjing, Jiangsu 211106 (CN); YU, Jian, Nanjing, Jiangsu 211106 (CN); FAN, Baofeng, Nanjing, Jiangsu 211106 (CN); GOU, Jia, Nanjing, Jiangsu 211106 (CN); XU, Rui, Nanjing, Jiangsu 211106 (CN)
(74) Representative: Sun, Yiming

(56) References cited:
- EP-A2- 2 042 271
- US-A1- 2022 193 868

## Description

### TECHNICAL FIELD

The present application relates to a power tool and, in particular, to an impact tool.

### BACKGROUND

An impact tool refers to a tool capable of outputting rotational movements with a certain impact frequency. Common impact tools include an impact wrench, an impact screwdriver, and an impact drill. The impact wrench is typically used for screwing bolts, nuts, and the like. The impact screwdriver is typically used for loosening or tightening screws and the like. The impact drill is typically used for drilling holes through impacts.

To output the rotational movements with the impact frequency, the impact tool typically includes an output assembly for outputting a rotational force and an impact mechanism for impacting on the output assembly cyclically. In a related technical product, when the impact screwdriver loosens a thin screw, a trigger is pressed, and then the impact screwdriver rotates at an excessively high speed. If the screw is completely fastened in this case, the operation surface of the screw will be damaged due to the excessively high speed of a bit. When the impact screwdriver tightens the thin screw, the screw is not completely flush with the operation surface sometimes. Therefore, the screw needs to be screwed completely through a continuous operation. In this case, the operation surface will be damaged by an excessively fast impact of the impact screwdriver.

This part provides background information related to the present application. The background information is not necessarily the existing art.

Document US 2022/193868 A1 discloses an impact power tool that includes a housing, a motor, a controller, an output member configured to be rotated when the motor is energized, and an impact mechanism configured to rotationally drive the output member. The impact mechanism is configured to selectively apply rotational impacts to the output member when a torque on the output member exceeds a torque threshold. The controller is configured to control the motor during a first phase of operation with open loop control and a baseline conduction band and advance angle setting when a sensed tool operation parameter is one of above or below a threshold value. The controller is configured to control the motor during a second phase of operation with closed speed loop control and an increased conduction band and advance angle setting when the sensed tool operation parameter is the other of above or below the threshold value.

### SUMMARY

To resolve the above technical problem, the present invention provides an impact tool as defined in the independent claim attached. Preferred embodiments of the invention are defined in dependent claims attached.

### BRIEF DESCRIPTION OF DRAWINGS

FIG. 1 is a structural view of an impact tool according to an example of the present application;
FIG. 2 is a sectional view of the impact tool in FIG. 1;
FIGS. 3a to 3c are structural views of an output shaft according to the present application;
FIG. 4 is a circuit diagram of an impact tool according to an example of the present application;
FIG. 5 is a control flowchart of an impact tool according to an example of the present application;
FIG. 6 is a control flowchart of an impact tool according to another example of the present application;
FIG. 7 is a control flowchart of an impact tool according to another example of the present application;
FIG. 8 is a control flowchart of an impact tool according to another example of the present application;
FIG. 9 is a control flowchart of an impact tool according to another example of the present application;
FIG. 10 is a control flowchart of an impact tool according to another example of the present application;
FIG. 11 is a control flowchart of an impact tool according to another example of the present application;
FIG. 12 is a control flowchart of an impact tool according to another example of the present application;
FIG. 13 is a flowchart of a control method for adjusting an impact tool to a target duty cycle according to an example of the present application;
FIG. 14 is another flowchart of a control method for adjusting an impact tool to a target duty cycle according to an example of the present application;
FIG. 15 is a structural view of an impact tool according to an example of the present application, where the impact tool is provided with an illumination assembly;
FIGS. 16a and 16b are schematic views showing part of structures of the impact tool shown in FIG. 15;
FIGS. 17a to 17c are block diagrams showing electrical structures of an impact tool; and
FIGS. 18a and 18b are other block diagrams showing electrical structures of an impact tool.

### DETAILED DESCRIPTION

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, Aand/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

To clearly illustrate technical solutions of the present application, an upper side, a lower side, a left side, and a right side are defined in the drawings of the specification.

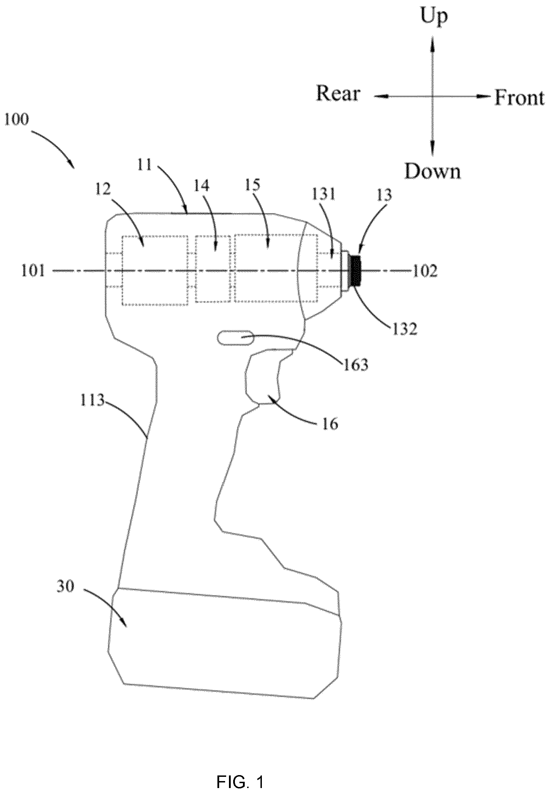

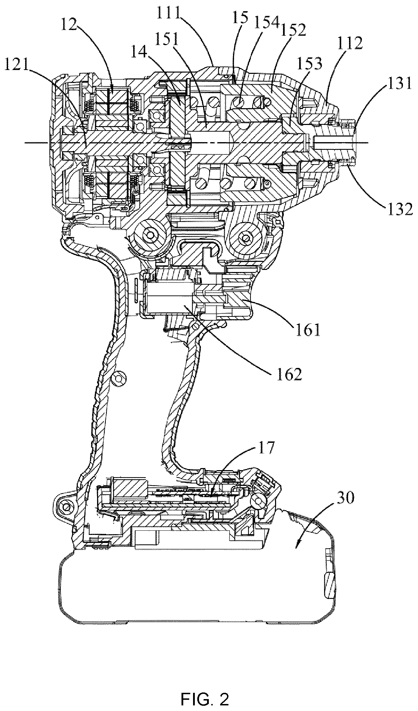

FIGS. 1 and 2 show an impact tool in an example of the present application. In this example, the impact tool is an impact screwdriver 100. It is to be understood that in other alternative examples, different working accessories may be mounted to the impact tool. The impact tool with one of these different working accessories may be, for example, an impact drill or an impact wrench.

The impact screwdriver 100 includes a power supply 30. In this example, the power supply is a direct current power supply. The direct current power supply is configured to power the impact screwdriver 100. The direct current power supply is a battery pack, and the impact screwdriver 100 is powered by the battery pack cooperating with a corresponding power supply circuit. It is to be understood by those skilled in the art that the power supply is not limited to the direct current power supply, and the corresponding components in the machine may be powered through mains electricity or an alternating current power supply in cooperation with corresponding rectifier, filter, and voltage regulation circuits. In this example, the direct current power supply is the battery pack 30. The battery pack 30 is used below instead of the power supply, which is not intended to limit the present application.

In this example, the battery pack 30 may be a lithium battery pack, a solid-state battery pack, or a pouch battery pack. In some examples, the nominal voltage of the battery pack 30 is higher than or equal to 8 V and lower than or equal to 48 V. In some examples, the nominal voltage of the battery pack 30 is higher than or equal to 48 V and lower than or equal to 80 V.

As shown in FIGS. 1 and 2, the impact screwdriver 100 includes a housing 11, a motor 12, an output mechanism 13, a transmission mechanism 14, and an impact mechanism 15. The motor 12 includes a drive shaft 121 rotating about a first axis 101. In this example, the motor 12 is specifically configured to be an electric motor. The electric motor 12 is used below instead of the motor, and an electric motor shaft 121 is used below instead of the drive shaft, which is not intended to limit the present application.

The output mechanism 13 includes an output shaft 131 for connecting a working accessory and driving the working accessory to rotate. A clamping assembly 132 is disposed at the front end of the output shaft 131 and can clamp corresponding working accessories, such as a screwdriver, a drill bit, and a socket, when different functions are implemented.

The output shaft 131 is used for outputting torque to the outside so that a fastener is operated. The output shaft 131 rotates about an output axis 102, where the first axis 101 coincides with the output axis 102 in this example. In other alternative examples, an included angle of a certain degree exists between the output axis 102 and the first axis 101. In other alternative examples, the first axis 101 and the second axis 102 are parallel to each other but do not coincide with each other.

The impact mechanism 15 is used for applying an impact force to the output shaft 131. The impact mechanism 15 includes a main shaft 151, an impact block 152 sleeved on the circumference of the main shaft 151, a hammer anvil 153 disposed at the front end of the impact block 152, and an elastic element 154. The hammer anvil 153 is connected to the output shaft 131. In this example, the hammer anvil 153 includes an anvil 155, and the output shaft 131 is formed at the front end of the anvil 155. It is to be understood that the anvil 155 and the output shaft 131 may be integrally formed or separately formed as independent parts.

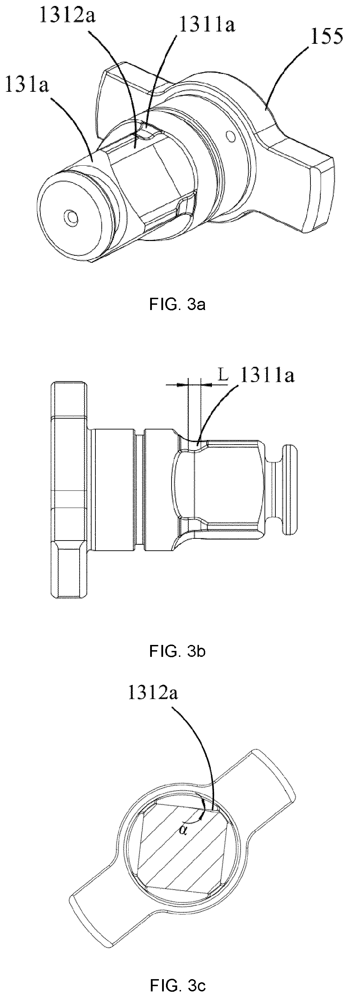

In some examples, FIGS. 3a to 3c are structural views of an output shaft 131a suitable for an impact wrench according to the present application. A recess 1311a is provided between the output shaft 131a and the anvil 155. For example, the length L of the recess 1311a is greater than or equal to 0.5 mm and less than or equal to 1.8 mm so that the stress generated during an impact can be dispersed and stress concentration is reduced. Thus, the fracture between the output shaft 131a and the anvil 155 is avoided.

In some examples, when the clamping assembly at the front end of the output shaft 131a clamps the socket, a bevel 1312a may be provided on a sidewall of the output shaft 131a. For example, the included angle α between the bevel 1312a and a plane of a square shaft is greater than or equal to 0° and less than or equal to 0.8° so that the gap between the square shaft of the output shaft and the socket is reduced. Thus, the output shaft 131a more stably drives the socket to rotate, and the precision with which the socket is sleeved on the impact wrench is improved.

With continued reference to FIGS. 1 and 2, the elastic element 154 provides a force for the impact block 152 to cause the impact block 152 to approach the hammer anvil 153. In this example, the elastic element 154 is a coil spring. A pair of first ball grooves that open forwards and extend backwards along a front and rear direction are provided on the front end surface of the impact block 152. A pair of second ball grooves are formed on the outer surface of the main shaft 151. The impact mechanism 15 further includes rolling balls. The rolling balls straddle the first ball grooves and the second ball grooves so that the impact block 152 is connected to the main shaft 151. In this example, each of the rolling balls is a steel ball.

The housing 11 includes an electric motor housing 111 for accommodating the electric motor 12 and an output housing 112 for accommodating at least part of an output assembly 13. The output housing 112 is connected to the front end of the electric motor housing 111. The housing 11 is further formed with or connected to a grip 113 to be operated by a user. The grip 113 and the electric motor housing 112 form a T-shaped or L-shaped structure, which is convenient for the user to hold and operate. The battery pack 30 is connected to an end of the grip 113.

The transmission mechanism 14 is disposed between the electric motor 12 and the impact mechanism 15 and used for transmitting power between the electric motor shaft 121 and the main shaft 151. In this example, the transmission mechanism 14 is decelerated by a planet gear. The working principle according to which a planet gear performs the deceleration and the deceleration implemented by the transmission mechanism have been completely disclosed to those skilled in the art. Therefore, a detailed description is omitted herein for the brevity of the specification.

When the impact screwdriver 100 works with no load, the impact mechanism 15 does not impact and plays a transmission role in transmitting the rotation of the electric motor 12 to the output shaft 131. When a load is applied to the impact tool 100, the rotation of the output shaft 131 is blocked. The output shaft 131 may reduce a rotational speed or may completely stop rotating due to different magnitudes of the load. When the output shaft 131 completely stops rotating, the hammer anvil 153 also stops rotating. Due to the limitation of the hammer anvil 153 on the impact block 152 in a circumferential direction, the impact block 152 also stops rotating. However, the main shaft 151 continues rotating such that the rolling balls are pressed to move along ball channels, thereby driving the impact block 152 to be displaced backwards along the axis of the main shaft. At the same time, the elastic element 154 is pressed until the hammer anvil 153 is completely separated from the impact block 152. In this case, the main shaft 151 drives the impact block 152 to rotate at a certain rotational speed, and the elastic element 154 springs back along an axial direction. When the impact block 152 rotates to be in contact with the hammer anvil 153, the impact block 152 applies the impact force to the hammer anvil 153. Under the action of this impact force, the output shaft 131 overcomes the load and continues rotating by a certain angle, and then the output shaft 131 stops rotating again. The preceding process is repeated. Since an impact frequency is high enough, a relatively continuous impact force is applied to the output shaft 131 so that the working accessory works continuously.

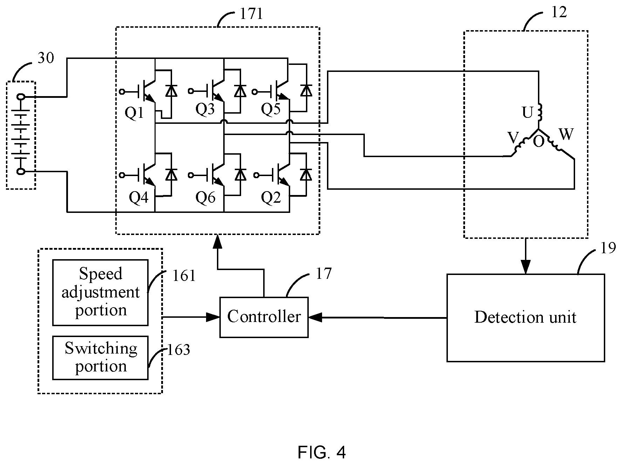

As shown in FIG. 4, the electric motor 12 includes stator windings and a rotor. In some examples, the electric motor 12 is a three-phase brushless motor including a rotor with a permanent magnet and three-phase stator windings U, V, and W that are commutated electronically. In some examples, the three-phase stator windings U, V, and W adopt a star connection. In other examples, the three-phase stator windings U, V, and W adopt a delta connection. However, it is to be understood that other types of brushless motors are also within the scope of the present disclosure. The brushless motor may include less than or more than three phases.

As shown in FIGS. 1 to 4, the impact screwdriver 100 includes a control mechanism. The control mechanism includes a driver circuit 171 and a controller 17. The driver circuit 171 is electrically connected to the stator windings U, V, and W of the electric motor 12. The driver circuit 171 is configured to transmit the current from the battery pack 30 to the stator windings U, V, and W, so as to drive the electric motor 12 to rotate. In an example, the driver circuit 171 includes multiple switching elements Q1, Q2, Q3, Q4, Q5, and Q6. A gate terminal of each switching element is electrically connected to the controller 17 and is configured to receive a control signal from the controller 17. The drain or source of each switching element is connected to the stator windings U, V, and W of the electric motor 12. The switching elements Q1 to Q6 receive control signals from the controller 17 to change their respective on states, thereby changing the current loaded by the battery pack 30 to the stator windings U, V, and W of the electric motor 12. In an example, the driver circuit 171 may be a three-phase bridge driver circuit including six controllable semiconductor power devices (such as field-effect transistors (FETs), bipolar junction transistors (BJTs), or insulated-gate bipolar transistors (IGBTs)). It is to be understood that the preceding switching elements may be any other types of solid-state switches such as the IGBTs or the BJTs.

In this example, the controller 17 is configured to control the electric motor 12. The controller 17 is disposed on a control circuit board. The control circuit board includes a printed circuit board (PCB) and a flexible printed circuit (FPC) board. The controller 17 adopts a dedicated control chip, for example, a single-chip microcomputer or a microcontroller unit (MCU). Specifically, the controller 17 controls the on or off states of the switching elements in the driver circuit 171 through the control chip. In some examples, the controller 17 controls the ratio of the on time of a drive switch to the off time of the drive switch based on a pulse-width modulation (PWM) signal. It is to be noted that the control chip may be integrated into the controller 17 or may be disposed independently of the controller 17. The structural relationship between a driver chip and the controller 17 is not limited in this example.

The impact screwdriver 100 further includes a power switch 16 and a switching portion 163. The power switch 16 is disposed on the grip 113 for the user to operate. The power switch 16 is configured to control the energization state of the electric motor 12. The switching portion 163 is disposed on the upper side of the main switch 16 and configured to be operated to cause the electric motor 12 to rotate in a forward rotation direction in which the fastener is fastened or screwed or a reverse rotation direction in which the fastener is loosened or unscrewed. In this example, the switching portion 163 is a switching switch.

The power switch 16 is a trigger switch. The trigger switch includes a speed adjustment portion 161 to be operated and a slide rheostat 162. Therefore, the rotational speed of the electric motor 12 may also be adjusted by the power switch 16. The rotational speed of the electric motor 12 is adjusted according to a triggering stroke of the speed adjustment portion 161. If the triggering stroke of the speed adjustment portion 161 is different, the slide rheostat 162 outputs a different signal.

The triggering stroke of the speed adjustment portion 161 is positively correlated with the duty cycle of the PWM signal of the electric motor 12. The duty cycle of the PWM signal is positively correlated with the rotational speed of the electric motor 12. The triggering stroke of the speed adjustment portion 161 is a trigger stroke of the trigger switch. When the trigger stroke of the trigger switch is relatively short, the duty cycle of the PWM signal is less. In this case, the rotational speed of the electric motor 12 is relatively low.

In some examples, the mapping relationship between the triggering stroke of the speed adjustment portion 161 and the PWM signal is stored in the impact screwdriver 100. The mapping relationship may be linear or non-linear, which is not limited in the example of the present application.

In some examples, the impact screwdriver 100 further includes a detection unit 19 configured to detect a parameter of the electric motor. The parameter of the electric motor includes at least one of a voltage of the electric motor and a current of the electric motor. The input of the detection unit 19 is electrically connected to the electric motor 12, and the output of the detection unit 19 is electrically connected to the controller 17 so that it is convenient for the controller 17 to acquire the parameter of the electric motor detected by the detection unit 19. In some examples, the detection unit 19 is configured to detect the current of the electric motor and includes a current sense resistor, a Hall current sensor, or a metal-oxide-semiconductor field-effect transistor (MOSFET) turn-on resistor. In some examples, the detection unit 19 is configured to detect the voltage of the electric motor and includes one or more of an inductive voltage transformer, a Hall voltage sensor, a voltage-dividing voltage sensor, a fiber-optic voltage sensor, and a resistor divider.

When a screw is completely fastened or a screw is not completely flush with an operation surface, the impact screwdriver 100 impacting at an excessively high speed may damage the operation surface. Considering the preceding situation, in the related art, every time the impact mechanism 15 of the impact tool impacts, a load value of the impact mechanism 15 varies. A variation process of the load value is generally as follows: before the impact mechanism 15 impacts, a load value to which the impact mechanism 15 is subjected continuously increases, and when the load value to which the impact mechanism 15 is subjected reaches a threshold, the impact mechanism 15 impacts. After the impact mechanism 15 impacts, the load value to which the impact mechanism 15 is subjected immediately decreases. After the impact mechanism 15 impacts once and the electric motor rotates continuously, the impact mechanism 15 continuously impacts, thereby resulting in a short interval between every two impacts and a short duration of a single impact.

When analyzing, step by step, the process where the impact tool in the related art impacts, the applicant finds that at the first stage, a torque value outputted by the electric motor 12 is greater than a load value to which a part to be driven by the electric motor 12 is subjected so that it is ensured that the electric motor 12 is not back-driven by the load at the output of the electric motor in the process where the load to which the impact mechanism 15 is subjected continuously increases, and therefore, the rotational speed of the electric motor 12 needs to be increased so that proper torque is outputted. It is to be noted that if the electric motor 12 is back-driven by the load at the output of the electric motor, parameters for detecting the position of the rotor of the electric motor, for example, the phase of the electric motor 12 or the back electromotive force of the electric motor 12 are caused to be abnormal during non-inductive control of the electric motor 12. In addition, if the electric motor 12 is severely back-driven, the electric motor 12 may be damaged. However, if the speed of the electric motor is increased to be matched with the load value, low-speed control cannot be implemented.

Moreover, at the second stage, after the impact mechanism 15 impacts, the load value to which the impact mechanism 15 is subjected immediately decreases. In this case, the electric motor 12 needs to reduce the speed as the load value varies. However, in this case, because of a short interval between two impacts, the electric motor 12 needs to increase the speed faster at the load increasing stage of the next impact if the electric motor 12 reduces the speed too fast. However, if the electric motor 12 does not reduce the speed, the low-speed control cannot be implemented.

In an example of the present application, the controller 17 is configured to, when the impact tool is in a low-speed mode and it is detected that the impact mechanism 15 applies the impact force to the output shaft 131, perform the operations periodically: determining that the impact mechanism 15 impacts a preset number of times and controlling the electric motor 12 to shut down for a preset period and then restart. The low-speed mode refers to a mode in which the electric motor rotates at a low speed. Cyclical control through the preset number of impacts and the shutdown for the preset period can cause the impact screwdriver 100 to continuously impact at a low speed with controllable impact frequency when the electric motor rotates at the low speed. Thus, the impact screwdriver 100 is prevented from impacting at the excessively high speed and damaging the operation surface.

When the electric motor 12 is started, the electric motor 12 has a certain acceleration. After it is determined that the impact mechanism 15 impacts the preset number of times, the electric motor 12 is immediately controlled to shut down and brake. After shutting down for the proper preset period, the electric motor 12 is restarted at the acceleration. Thus, there is relatively high moment of inertia in the impact mechanism 15, for example, the impact block 152 has the relatively high moment of inertia so that the impact mechanism 15 generates relatively high impact torque. In addition, since there is the shutdown period between the two impacts, the average rotational speed of the output shaft 131 per unit of time is also reduced, thereby implementing the low-speed control of the output state of the impact screwdriver 100.

In this example, when the controller 17 determines that the impact screwdriver 100 is in the low-speed mode, the electric motor 12 starts with a preset acceleration value. For example, when the impact screwdriver 100 bears no load, the controller 17 controls the electric motor 12 to be set to start with a first acceleration value. A preset acceleration is greater than a first acceleration. The first acceleration and the preset acceleration are each pre-calibrated parameters and stored in the controller 17. When the trigger switch is activated and the controller 17 determines that the impact screwdriver 100 bears no load, the controller 17 sends the signal that the start is performed with the first acceleration value to the electric motor 12. When the controller 17 determines that the impact screwdriver 100 is in the low-speed mode, the controller 17 sends the signal that the start is performed with the preset acceleration value to the electric motor 12. Optionally, other start acceleration values are stored in the controller 17 to correspond to different start conditions of the impact screwdriver 100. The preset acceleration value may be a maximum acceleration value or may be greater than the first acceleration value. However, the preset acceleration value may be less than each of start acceleration values in other working conditions. The preceding specific value is adaptively set, which does limit substantive content of the present application.

The controller 17 is configured to determine, according to a stroke signal of the trigger switch, that the trigger stroke is within a preset stroke range and determine that the impact tool is in the low-speed mode. The stroke signal refers to a signal indicating the length of the trigger stroke of the trigger switch. The preset stroke range refers to a trigger stroke range in the case where the impact tool is in the low-speed mode. Therefore, it can be determined that the impact tool is in the low-speed mode when the trigger stroke is within the preset stroke range.

In some examples, the controller 17 is specifically configured to control windings of the electric motor 12 to be short-circuited to brake the electric motor 12 and start the electric motor 12 at the preset acceleration after the preset period. The short-circuit breaking of the electric motor 12 is implemented with the induced electromotive force of the electric motor 12. When the rotor of the electric motor 12 rotates, the induced electromotive force is generated in the stator windings due to the change of a magnetic field. When the two windings of the electric motor 12 are short-circuited, the induced electromotive force generates a certain current flowing through the windings such that an electromagnetic braking force is formed. This electromagnetic braking force can cancel out the mechanical movement of the electric motor 12, thereby implementing a braking effect.

The electric motor 12 is started at the preset acceleration, and the impact mechanism 15 impacts the preset number of times. Then, the windings of the electric motor 12 are immediately controlled to be short-circuited to brake the electric motor 12. Then, the electric motor 12 is restarted at the preset acceleration, and the impact mechanism 15 impacts the preset number of times. The preceding operations are performed cyclically. Thus, the impact block 152 in the impact tool 100 has the relatively high moment of inertia, thereby generating the relatively high impact torque. After the preset number of impacts, the electric motor 12 shuts down fast so that the impact tool presents an overall low-speed running state to the user, and the user can easily control the tool.

In some examples, the preset number of times includes one. That is, after the impact tool impacts once, the electric motor shuts down for the preset period, and then, after the impact tool impacts once again, the electric motor shuts down for the preset period again, which are regarded as cycles. Thus, the impact tool can run at the low speed.

In some examples, the preset period is positively correlated with the trigger stroke. A longer preset period indicates that the electric motor 12 shuts down for a longer period. Therefore, the longer the trigger stroke, the longer period the electric motor 12 shuts down for, and the shorter the trigger stroke, the shorter period the electric motor 12 shuts down for. In an example, the preset period is shorter than or equal to 500 ms. For example, the preset period includes 320 ms. For example, the preset period includes 200 ms. Optionally, a specific preset period is determined according to a current trigger stroke and the mapping relationship between the trigger stroke and the preset period, which is not specifically limited in the example of the present application. In some examples, the mapping relationship between the trigger stroke and the preset period is stored in the impact screwdriver 100. The mapping relationship may be linear or non-linear, which is not limited in the example of the present application.

In some examples, the controller 17 is configured to, when the electric motor 12 shuts down for the preset period, determine a target duty cycle of an electric motor drive signal of the electric motor 12 based on a voltage of the battery pack 30 and control the electric motor 12 to start running at the target duty cycle. In this example, it is defined that Ua denotes the voltage of the battery pack 30, U denotes the voltage of the electric motor 12, and the voltage U = Ua × the duty cycle of the electric motor drive signal. Therefore, the duty cycle of the electric motor drive signal is adjustable according to a variation in Ua so that it is ensured that U remains constant. The target duty cycle refers to a duty cycle that needs to be reached by the electric motor 12. The target duty cycle is inversely proportional to the voltage of the battery pack 30. Thus, when the voltage of the battery pack 30 decreases, the voltage applied to the electric motor 12 can remain constant, and output power of the electric motor 12 remains substantially constant. Moreover, output torque is related to the output power, and the torque generated by the power remains almost constant. Therefore, as the power of the battery pack 30 is consumed, the output torque of the impact tool is relatively stable.

In some examples, the target duty cycle is less than or equal to 40%. In an example, the target duty cycle is 30%. In another example, the target duty cycle is 31%, 32%, 33%, 34%, 35%, 36%, 37%, 38%, or 39%. A specific value of the target duty cycle may be set according to a specific structure and use requirements of the impact tool. The value of the target duty cycle is not specifically limited herein as long as the target duty cycle is less than or equal to 40% so that the impact tool can run at the low speed.

In some examples, the impact state of the impact mechanism 15 is determined through the current of the electric motor 12. It is determined, through a variation in the current during the impact, whether the impact occurs. Optionally, the current may be detected through any of the current sense resistor, the Hall current sensor, or the metal-oxide-semiconductor field-effect transistor (MOSFET) turn-on resistor. In other alternative examples, various physical signals at the time when the impact occurs, for example, electrical signals and audio signals, are detected for determination and collection. Then, feedback is provided for the controller 17 for determining that the impact mechanism 15 starts impacting on the output shaft 131. In some examples, the detection unit 19 determines a demagnetization period by detecting a bus voltage and determines, through the demagnetization period, that the impact mechanism 15 starts impacting on the output shaft 131. It has been fully disclosed to those skilled in the art that it is determined, with the preceding method, that the impact mechanism 15 starts impacting, that is, the impact mechanism 15 starts applying the impact force to the output shaft 131. Therefore, the above is not intended to limit the substantial contents of the present invention.

In some examples, the controller 17 is configured to acquire a commutation state of the electric motor and determine the number of impacts based on the commutation state of the electric motor. In this example, the commutation state of the electric motor includes a current number of commutation times. When the current number of commutation times is greater than a threshold of a preset number of commutation times, it is determined that the impact mechanism 15 applies the impact force to the output shaft 131. One impact occurs, and the number of impacts is increased by one. In addition, the calculation of the current number of commutation times is restarted. The threshold of the preset number of commutation times is related to the reduction ratio of the transmission mechanism 14 and can be preset according to the reduction ratio of the transmission mechanism 14 of the current impact tool. A specific size of the threshold of the preset number of commutation times is not specifically limited herein.

In some examples, the current of the electric motor 12 may be sampled through any of the current sense resistor, the Hall current sensor, or the metal-oxide-semiconductor field-effect transistor (MOSFET) turn-on resistor. Then, the sampled current is amplified and the analog quantity of a waveform is formed. Then, the analog quantity is converted into a digital quantity. Finally, the rate of change of data about the digital quantity is calculated, and it is determined whether the direction of the rate of change of the data is changed. When the direction of the rate of change of the data is changed, it is determined that the electric motor 12 commutates once. The current number of commutation times is increased by one. The commutation state of the electric motor may be acquired in another manner in the related art. A specific manner in which the commutation state of the electric motor is acquired is not specifically limited herein.

The controller 17 is specifically configured to, when the trigger stroke exceeds the preset stroke range, determine that the impact tool is in a normal mode and control the electric motor 12 to continuously perform a rotational output so that the impact mechanism 15 impacts on the output shaft 131 periodically. Since the preset stroke range refers to the trigger stroke range in the case where the impact tool is in the low-speed mode, the trigger stroke exceeding the preset stroke range indicates that the impact tool is in the normal mode and the rotational speed of the output shaft needs to be increased. In this case, the electric motor 12 is controlled to continuously perform the rotational output, and an impact speed is higher than that in the low-speed mode with the cyclical control through the preset number of impacts and the shutdown for the preset period. Thus, the impact mechanism 15 can strongly impact on the output shaft 131 cyclically.

In some examples, the controller 17 is specifically configured to, when the trigger stroke exceeds the preset stroke range, determine that the impact tool is in the normal mode, determine a required duty cycle of the electric motor 12 based on the trigger stroke, and output a drive signal with the required duty cycle to the electric motor 12, so as to control the electric motor 12 to continuously perform the rotational output at the required duty cycle.

The trigger stroke is positively correlated with the duty cycle of the drive signal of the electric motor 12, and the duty cycle of the drive signal is positively correlated with the rotational speed of the electric motor 12. In some examples, the mapping relationship between the trigger stroke and the duty cycle of the drive signal of the electric motor 12 is stored in the impact screwdriver 100. The mapping relationship may be linear or non-linear, which is not limited in the example of the present application. The required duty cycle refers to the duty cycle of the drive signal of the electric motor 12 corresponding to the current trigger stroke. A longer trigger stroke indicates a greater required duty cycle and a higher rotational speed of the electric motor 12. Therefore, in this case, the rotational speed of the electric motor 12 is adjusted according to the trigger stroke, and the impact screwdriver 100 is caused to continuously impact at a relatively high speed cyclically.

In summary, in the whole control process of the impact tool, when the trigger stroke is within the preset stroke range and the impact tool is in the low-speed mode, the cyclical control through the preset number of impacts and the shutdown for the preset period is performed after it is detected that the impact occurs. Thus, the impact tool can be caused to continuously impact at the low speed with the controllable impact frequency. When the trigger stroke exceeds the preset stroke range and the impact tool is in the normal mode, the rotational speed of the electric motor 12 is adjusted according to the trigger stroke, and the impact screwdriver 100 is caused to continuously impact at the relatively high speed cyclically. Therefore, the impact tool can run stably and does not stall at either the low rotational speed or the high rotational speed. The impact tool can impact at the low speed or the high speed as desired. When the high speed of the impact tool is reduced to an excessively low speed, the impact tool does not stall. Thus, the user has good use experience.

In an example of the present application, the controller 17 is configured to, when the impact tool is in the low-speed mode and a load parameter exceeds a preset parameter threshold, perform the following operations periodically: determining that the condition is satisfied that the impact mechanism impacts a preset number of times, and controlling the electric motor 12 to shut down for a preset period and then restart.

The preset parameter threshold includes a maximum value of the load parameter with which the impact mechanism 15 of the impact tool runs while playing the transmission role. The load parameter exceeding the preset parameter threshold indicates that the impact mechanism 15 should impact. However, in the related art, when the electric motor 12 outputs a relatively low rotational speed, the rotation of the impact block 152 is easily blocked. In this case, according to different program settings, the electric motor 12 may start stall protection, continuously shutting down or increasing the speed to increase the output of the electric motor 12. Thus, the impact block 152 breaks through a stall point. In this case, low-speed running cannot be implemented.

In this example, when the impact tool determines, according to the stroke signal of the trigger switch, that the trigger stroke is within the preset stroke range such that it is determined that the impact tool is in the low-speed mode, the controller 17 controls the electric motor 12 to shut down for the preset period and then restart after determining that the load parameter exceeds the preset parameter threshold and then determining that the condition is satisfied that the impact mechanism 15 impacts the preset number of times. "Determining that the condition is satisfied that the impact mechanism 15 impacts the preset number of times" does not necessarily refer to that the impact mechanism 15 applies the impact force to the output shaft 131. Instead, "determining that the condition is satisfied that the impact mechanism 15 impacts the preset number of times" refers to that a preset condition parameter that can characterize the number of impacts satisfies a preset value. In this case, the impact mechanism 15 may apply the impact force to the output shaft 131, or the impact mechanism 15 may not or may not continuously apply the impact force.

The electric motor 12 is controlled to shut down for the preset period and then restart. That is, after the electric motor 12 is controlled to brake and shut down for the proper preset period, the electric motor 12 is restarted at the acceleration. Therefore, there is the relatively high moment of inertia in the impact mechanism 15, for example, the impact block 152 has the relatively high moment of inertia so that the impact mechanism 15 generates the relatively high impact torque. Further, the relative movement between the impact block 152 and the hammer anvil 153 may occur. Cyclical control through the start at the preset acceleration and the shutdown for the preset period is performed. Thus, the impact screwdriver 100 can be caused to continuously impact at the low speed with the controllable impact frequency. It is less likely to stall or fail to impact in a low-speed impact process.

In this example, after the load reaches the preset parameter threshold, the condition characterizing the number of impacts is directly determined. Thus, even if the impact mechanism 15 cannot actually impact in the first impact cycle or the first several impact cycles when the electric motor 12 runs at the low speed, the impact mechanism 15 may actually impact after one or more cycles in which the electric motor 12 shuts down and starts and continue performing the control process where the electric motor 12 shuts down for the preset period and then starts after the preset number of impacts. The impact screwdriver 100 can be caused to continuously impact at the low speed with the controllable impact frequency when the electric motor 12 rotates at the low speed. Thus, the impact screwdriver 100 is prevented from impacting at the excessively high speed and damaging the operation surface.

In some examples, the controller 17 is configured to, in response to the electric motor 12 not commutating within a preset duration of commutation, determine that the load parameter exceeds the preset parameter threshold. The control of a three-phase brushless motor BLDC is used as an example. The three-phase brushless motor BLDC is controlled with a six-step commutation method. Optionally, the electric motor 12 runs in the manner that "two phases are turned on and three phases and six states are provided". Only two phases are turned on in each working state. Therefore, a commutation duration of the electric motor 12 may be pre-calibrated according to running settings of the electric motor 12. The electric motor 12 does not commutate in the preset duration of commutation, which indicates that the impact should but may not occur, that is, the rotation of the impact block 152 is blocked. It is determined that the load parameter exceeds the preset parameter threshold. In this example, the preset duration of commutation is shorter than or equal to 40 ms.

In some examples, the controller 17 is configured to, in response to a phase error occurring in the electric motor 12, determine that the load parameter exceeds the preset parameter threshold. The phase error occurring in the electric motor 12 refers to phase deviations between three phases of currents and the magnetic field in the electric motor 12, which indicates that the impact should but may not occur, resulting in that the phase error occurs in the electric motor 12. Therefore, it is determined that the load parameter exceeds the preset parameter threshold.

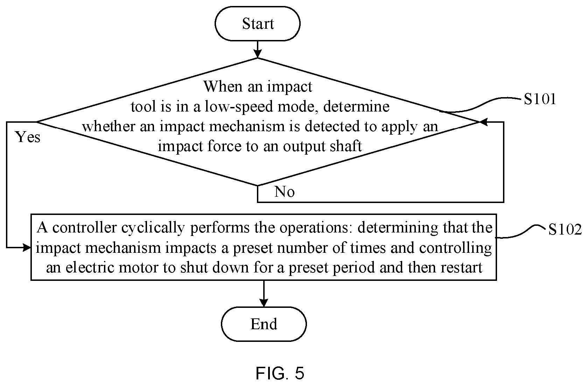

Referring to FIG. 5, a control flowchart of the impact tool in the preceding example specifically includes the steps below.

In S101, when the impact tool is in the low-speed mode, it is determined whether the impact mechanism is detected to apply the impact force to the output shaft.

If yes, step S102 is performed, and if not, S101 is performed continuously.

In S102, the controller cyclically performs the operations: determining that the impact mechanism impacts the preset number of times and controlling the electric motor to shut down for the preset period and then restart.

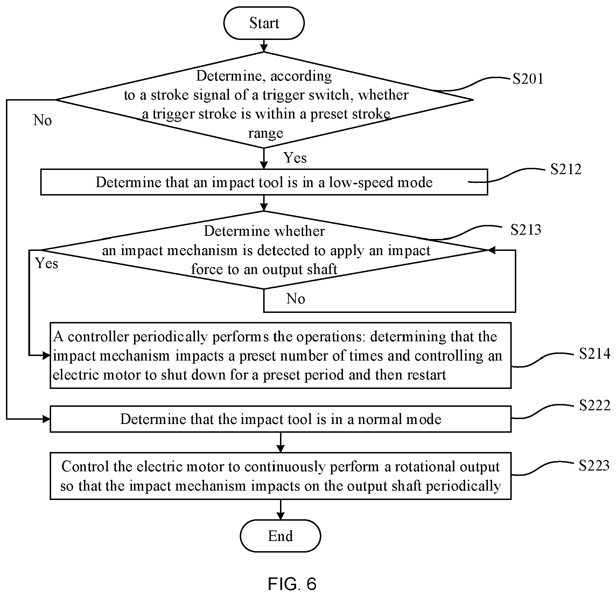

In some examples, as shown in FIG. 6, a control flowchart of the impact tool in the preceding example specifically includes the steps below.

In S201, it is determined, according to the stroke signal of the trigger switch, whether the trigger stroke is within the preset stroke range.

If the trigger stroke is within the preset stroke range, step S212 is performed. If the trigger stroke exceeds the preset stroke range, step S222 is performed.

In S212, it is determined that the impact tool is in the low-speed mode.

In S213, it is determined whether the impact mechanism is detected to apply the impact force to the output shaft.

If yes, step S214 is performed, and if not, S213 is performed continuously.

In S214, the controller periodically performs the operations: determining that the impact mechanism impacts the preset number of times and controlling the electric motor to shut down for the preset period and then restart.

When the electric motor is started, the electric motor starts with the preset acceleration value, where the preset acceleration value is greater than a start acceleration of the impact screwdriver 100 bearing no load.

In S222, it is determined that the impact tool is in the normal mode.

In S223, the electric motor is controlled to continuously perform the rotational output so that the impact mechanism impacts on the output shaft periodically.

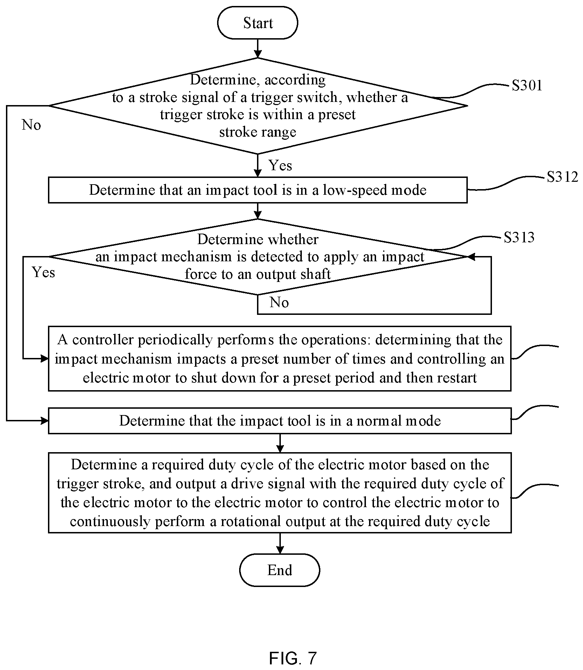

In some examples, as shown in FIG. 7, a control flowchart of the impact tool in the preceding example specifically includes the steps below.

In S301, it is determined, according to the stroke signal of the trigger switch, whether the trigger stroke is within the preset stroke range.

If the trigger stroke is within the preset stroke range, step S312 is performed. If the trigger stroke exceeds the preset stroke range, step S322 is performed.

In S312, it is determined that the impact tool is in the low-speed mode.

In S313, it is determined whether the impact mechanism is detected to apply the impact force to the output shaft.

If yes, step S314 is performed, and if not, S313 is performed continuously.

In S314, the controller periodically performs the operations: determining that the impact mechanism impacts the preset number of times and controlling the electric motor to shut down for the preset period and then restart.

In S322, it is determined that the impact tool is in the normal mode.

In S323, the required duty cycle of the electric motor is determined based on the trigger stroke, and the drive signal with the required duty cycle of the electric motor is outputted to the electric motor so that the electric motor is controlled to continuously perform the rotational output at the required duty cycle.

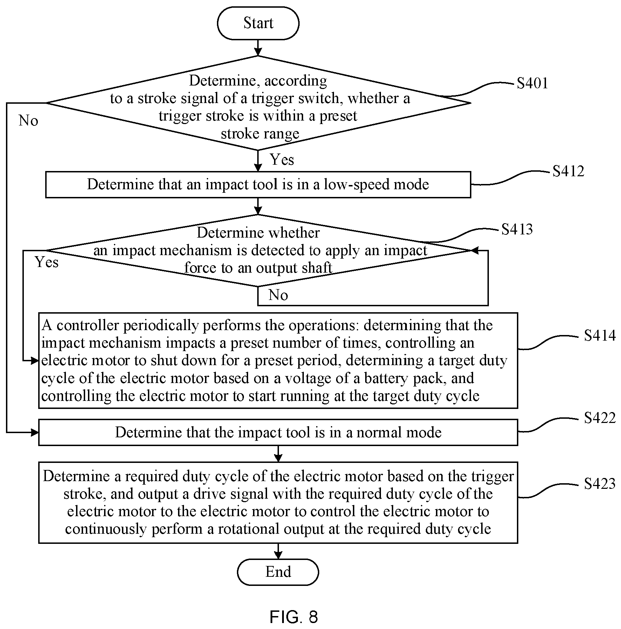

In some examples, as shown in FIG. 8, a control flowchart of the impact tool in the preceding example specifically includes the steps below.

In S401, it is determined, according to the stroke signal of the trigger switch, whether the trigger stroke is within the preset stroke range.

If the trigger stroke is within the preset stroke range, step S412 is performed. If the trigger stroke exceeds the preset stroke range, step S422 is performed.

In S412, it is determined that the impact tool is in the low-speed mode.

In S413, it is determined whether the impact mechanism is detected to apply the impact force to the output shaft.

If yes, step S414 is performed, and if not, S413 is performed continuously.

In S414, the controller periodically performs the operations: determining that the impact mechanism impacts the preset number of times, controlling the electric motor to shut down for the preset period, determining the target duty cycle of the electric motor based on the voltage of the battery pack, and controlling the electric motor to start running at the target duty cycle.

In S422, it is determined that the impact tool is in the normal mode.

In S423, the required duty cycle of the electric motor is determined based on the trigger stroke, and the drive signal with the required duty cycle of the electric motor is outputted to the electric motor so that the electric motor is controlled to continuously perform the rotational output at the required duty cycle.

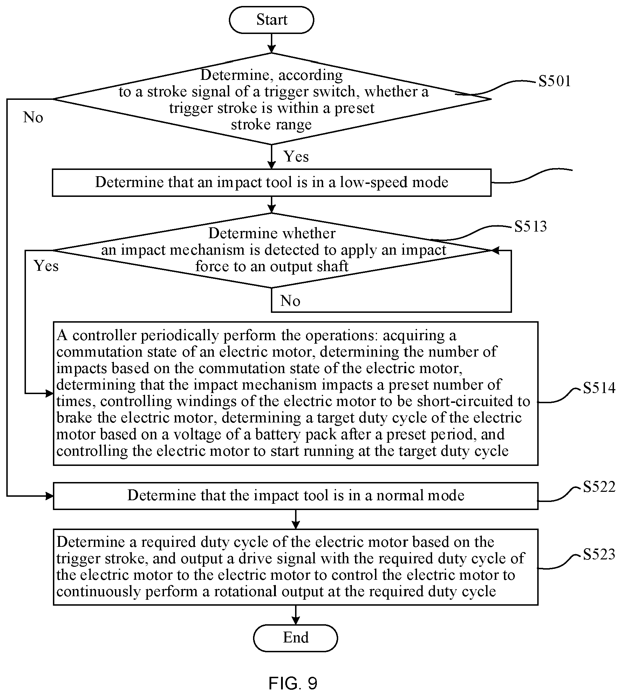

In some examples, as shown in FIG. 9, a control flowchart of the impact tool in the preceding example specifically includes the steps below.

In S501, it is determined, according to the stroke signal of the trigger switch, whether the trigger stroke is within the preset stroke range.

If the trigger stroke is within the preset stroke range, step S512 is performed. If the trigger stroke exceeds the preset stroke range, step S522 is performed.

In S512, it is determined that the impact tool is in the low-speed mode.

In S513, it is determined whether the impact mechanism is detected to apply the impact force to the output shaft.

If yes, step S514 is performed, and if not, S513 is performed continuously.

In S514, the controller periodically performs the operations: acquiring the commutation state of the electric motor, determining the number of impacts based on the commutation state of the electric motor, determining that the impact mechanism impacts the preset number of times, controlling the windings of the electric motor to be short-circuited to brake the electric motor, determining the target duty cycle of the electric motor drive signal of the electric motor based on the voltage of the battery pack after the preset period, and controlling the electric motor to start running at the target duty cycle.

When the electric motor is started, the electric motor starts with the preset acceleration value, where the preset acceleration value is greater than the start acceleration of the impact screwdriver 100 bearing no load.

In S522, it is determined that the impact tool is in the normal mode.

In S523, the required duty cycle of the electric motor is determined based on the trigger stroke, and the drive signal with the required duty cycle of the electric motor is outputted to the electric motor so that the electric motor is controlled to continuously perform the rotational output at the required duty cycle.

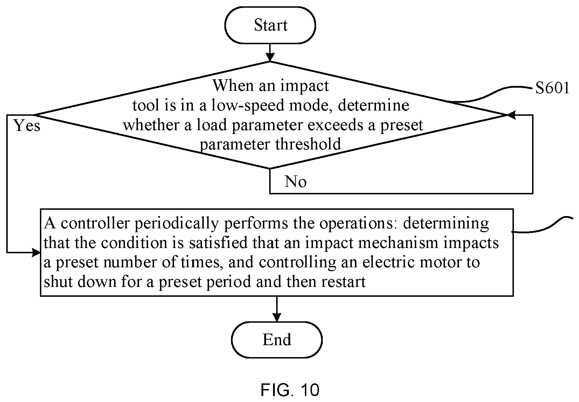

Referring to FIG. 10, a control flowchart of the impact tool in the preceding example specifically includes the steps below.

In S601, when the impact tool is in the low-speed mode, it is determined whether the load parameter exceeds the preset parameter threshold.

If yes, step S602 is performed, and if not, S601 is performed continuously.

In S602, the controller periodically performs the operations: determining that the condition is satisfied that the impact mechanism impacts the preset number of times, and controlling the electric motor to shut down for the preset period and then restart.

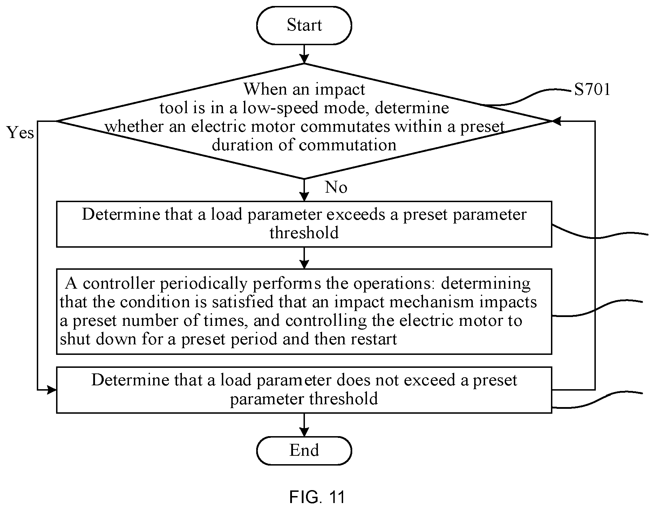

In some examples, as shown in FIG. 11, a control flowchart of the impact tool in the preceding example specifically includes the steps below.

In S701, when the impact tool is in the low-speed mode, it is determined whether the electric motor commutates within the preset duration of commutation.

If not, step S712 is performed, and if yes, step S722 is performed.

In S712, it is determined that the load parameter exceeds the preset parameter threshold.

In S713, the controller periodically performs the operations: determining that the condition is satisfied that the impact mechanism impacts the preset number of times, and controlling the electric motor to shut down for the preset period and then restart.

In S722, it is determined that the load parameter does not exceed the preset parameter threshold.

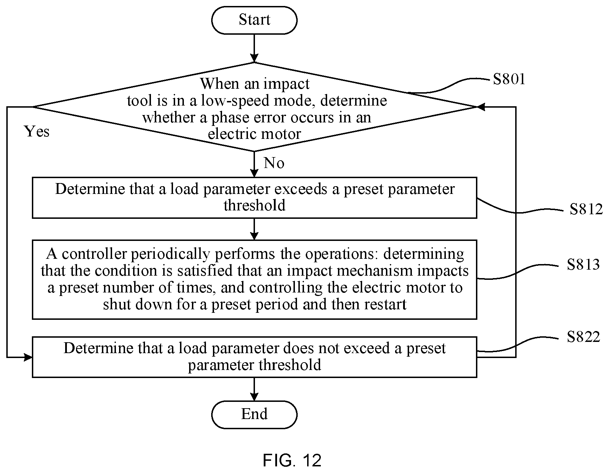

In some examples, as shown in FIG. 12, a control flowchart of the impact tool in the preceding example specifically includes the steps below.

In S801, when the impact tool is in the low-speed mode, it is determined whether the phase error occurs in the electric motor.

If yes, step S812 is performed, and if not, step S822 is performed.

In S812, it is determined that the load parameter exceeds the preset parameter threshold.

In S813, the controller periodically performs the operations: determining that the condition is satisfied that the impact mechanism impacts the preset number of times, and controlling the electric motor to shut down for the preset period and then restart.

In S822, it is determined that the load parameter does not exceed the preset parameter threshold.

It is to be understood that various forms of the preceding flows may be used, with steps reordered, added, or removed. For example, the steps described in the present invention may be executed in parallel, in sequence, or in a different order as long as the desired results of the technical solutions of the present application can be achieved. The execution sequence of these steps is not limited herein.

As shown in FIGS. 1 to 4, FIG. 13, and FIG. 14, the present application further provides an impact tool that adjusts an adjustment rate of the duty cycle according to an actual load state of an output so that the stability with which the impact tool works at the low speed is ensured. In this example, the controller is configured to, when the impact mechanism applies the impact force to the output shaft, acquire an actual load of the output shaft and control, according to a running state of the impact tool, the running duty cycle of the motor to be adjusted to a target duty cycle at different set rates when the actual load is greater than a preset load.

When a load is applied to the impact screwdriver 100 and the output shaft 131 stops rotating completely, the impact mechanism 15 applies the impact force to the output shaft 131 so that the output shaft 131 overcomes the resistance of the load to continue rotating.

In this example, the actual load is determined according to at least one of the rotational speed of the output shaft, a rotation angle of the output shaft, and a rotational acceleration of the output shaft.

In some examples, the actual load of the output shaft 131 may be determined according to parameters related to the current of the electric motor. It is to be explained that the parameters related to the current of the electric motor include the current of the electric motor and a parameter obtained through a calculation based on the current of the electric motor. When the output shaft 131 bears a relatively heavy load, the current of the electric motor also increases. When the output shaft 131 bears a relatively light load, the current of the electric motor 12 also decreases. The current of the electric motor may be acquired through a first detection assembly. The first detection assembly includes, but is not limited to, the current sense resistor, the Hall current sensor, or the metal-oxide-semiconductor field-effect transistor (MOSFET) turn-on resistor.

In some examples, the actual load of the output shaft 131 may be determined according to parameters related to the rotational speed of the electric motor. It is to be explained that the parameters related to the rotational speed of the electric motor include the rotational speed of the electric motor and a parameter obtained through a calculation based on the rotational speed of the electric motor, for example, torque of the electric motor. When the output shaft 131 bears the relatively heavy load, the rotational speed of the output shaft 131 decreases, and the rotational speed of the electric motor also decreases. When the output shaft 131 bears the relatively light load, the rotational speed of the output shaft 131 increases, and the rotational speed of the electric motor 12 also increases. The rotational speed of the electric motor may be acquired through a magnetic ring, a magnetic steel, a photoelectric code disk, an inductor, a Hall sensor, or a photoelectric sensor.

In some examples, the actual load of the output shaft 131 may be determined according to a rotation parameter of the output shaft 131. The rotation parameter of the output shaft 131 includes at least one of the rotational speed of the output shaft 131, the rotation angle of the output shaft 131, and the rotational acceleration of the output shaft 131. The rotation parameter of the output shaft 131 may be acquired through a second detection assembly. The second detection assembly may include, but is not limited to, a position sensor. Specifically, the position sensor may be a photodiode sensor, a magnetic sensor, or a potentiometer. The second detection assembly may be a rotation sensor. Specifically, the rotation sensor is a gyroscope sensor. The gyroscope sensor may be a single-axis, two-axis, or three-axis micro-electromechanical system (MEMS) sensor or a rotation sensor.

The preset load may be determined according to the running state of the impact screwdriver 100. When the impact screwdriver 100 is in different running states, the output shaft 131 can provide different torque values. The preset load may be set to different load values. Therefore, the preset load may be determined according to the torque values provided by the output shaft 131 in the different running states. In some examples, when the impact screwdriver 100 is in one running state, the output shaft 131 can provide a less torque value, and the preset load is set to a less load value; and when the impact screwdriver 100 is in another running state, the output shaft 131 can provide a greater torque value, and the preset load is set to a greater load value.

Each of the different set rates and the target duty cycle may be determined according to the running state of the impact screwdriver 100. In an example, the running states of the impact screwdriver 100 include multiple different running states of at least one of a gear, a rotation direction, and a remaining electric quantity of the power supply. Optionally, the set rates are different in the different running states. Optionally, target duty cycles are different in the different running states. In an illustrative example, Table 1 exemplarily shows the set rates and target duty cycles of the impact screwdriver 100 in the different running states.

**Table 1. Set rates and target duty cycles of the impact screwdrivers 100 in the different running states**

| **Running State** | **Target Duty Cycle** | **Set Rate** |
|---|---|---|
| First-gear forward rotation and a low electric quantity (for example, the electric quantity is less than or equal to 50%.) | 30% | Increased by δx per δi ms |
| First-gear forward rotation and a normal electric quantity | 25% | Increased by δy per δi ms, where δy < δx |
| First-gear reverse rotation and a low electric quantity (for example, the electric quantity is less than or equal to 50%.) | 40% | Increased by δx' per δi ms |
| First-gear reverse rotation and a normal electric quantity | 30% | Increased by δy' per δi ms, where δy' < δx' |

It is to be noted that table 1 only exemplarily shows values of target duty cycles and set rates in part of the running states and does not limit the target duty cycle and the set rate. In this example, the target duty cycle is less than or equal to 50%. When running at the low speed in a low-speed gear and bearing a relatively heavy load in an actual working process, the impact screwdriver 100 easily stalls due to the relatively heavy load. Therefore, the target duty cycle may be set to be less than or equal to 50% so that a defect of the impact screwdriver 100 in the related art is specifically cured.

In some examples, the gear of the impact screwdriver 100 is not limited to the first gear and may also include the second gear and/or the third gear. When the running states of the impact screwdriver 100 include the second gear, the target duty cycle in the second gear may be greater than the target duty cycle in the first gear, and the set rate in the second gear may be higher than the set rate in the first gear.

Optionally, when the impact mechanism 15 applies the impact force to the output shaft 131, the actual load of the output shaft 131 is acquired. If the actual load is greater than the preset load, the actual load of the output shaft 131 is relatively heavy. The electric motor 12 cannot provide a sufficient impact force at the rotational speed controlled by a current running duty cycle, which results in the risk that the impact screwdriver 100 stalls. Therefore, the running duty cycle of the electric motor 12 may be controlled to be adjusted to the target duty cycle at the set rates. In this example, the increase rate (that is, the acceleration) of the duty cycle in the case where the power supply has a low remaining electric quantity, that is, the battery has a low electric quantity is higher than the increase rate (that is, the acceleration) of the duty cycle in the case where the power supply has a high remaining electric quantity, that is, the battery has a normal electric quantity. When δi is equal to 1 ms, each of δx, δy, δx', and δy' is lower than or equal to 10%. In some examples, when δi is equal to 1 ms, each of δx, δy, δx', and δy' is lower than or equal to 8%.

In this example, when the impact mechanism 15 applies the impact force to the output shaft 131, the actual load of the output shaft 131 is acquired. When the actual load is greater than the preset load, the running duty cycle of the electric motor 12 is controlled, according to the running state of the impact screwdriver 100, to be adjusted to the target duty cycle at the different set rates. Thus, when the impact screwdriver 100 bears the relatively heavy actual load, the running duty cycle of the electric motor 12 is increased at the different set rates so that the impact screwdriver 100 is prevented from stalling in an impact process. In addition, the running duty cycle of the electric motor 12 is adjusted to the target duty cycle at the different set rates, instead of directly adjusting the running duty cycle of the electric motor 12 to the target duty cycle. Thus, the impact screwdriver 100 can run smoothly, which is conducive to improving operation stability and the use experience of the user.

In an optional example, the controller 17 is further configured to, when the current running duty cycle of the electric motor is greater than or equal to the target duty cycle, control the electric motor to run at the current running duty cycle.

Optionally, the running duty cycle of the electric motor 12 is positively correlated with a stroke amount of the operation member 161. When the stroke amount of the operation member 161 reaches the maximum value, the running duty cycle of the electric motor 12 also reaches the maximum value in a current running state. In this case, the running duty cycle of the electric motor 12, that is, the current running duty cycle of the electric motor 12, is greater than or equal to the target duty cycle. When the current running duty cycle of the electric motor 12 is greater than or equal to the target duty cycle, the electric motor 12 is controlled to run at the current running duty cycle, that is, the electric motor 12 is controlled to run according to an operation instruction of the user so that the impact screwdriver 100 runs according to the operation instruction of the user and the use experience of the user can be further improved.

In an optional example, the controller 17 is further configured to, when the actual load is less than or equal to the preset load, control the electric motor 12 to run at the current running duty cycle. The current running duty cycle is determined according to the operation instruction.

Optionally, when the impact mechanism 15 applies the impact force to the output shaft 131, the actual load of the output shaft 131 is acquired. If the actual load is less than or equal to the preset load, the actual load of the output shaft 131 is relatively light. The electric motor 12 can provide the sufficient impact force at the rotational speed controlled by the current running duty cycle. Therefore, the electric motor 12 may be controlled to continue running at the current running duty cycle so that the user has better use experience.

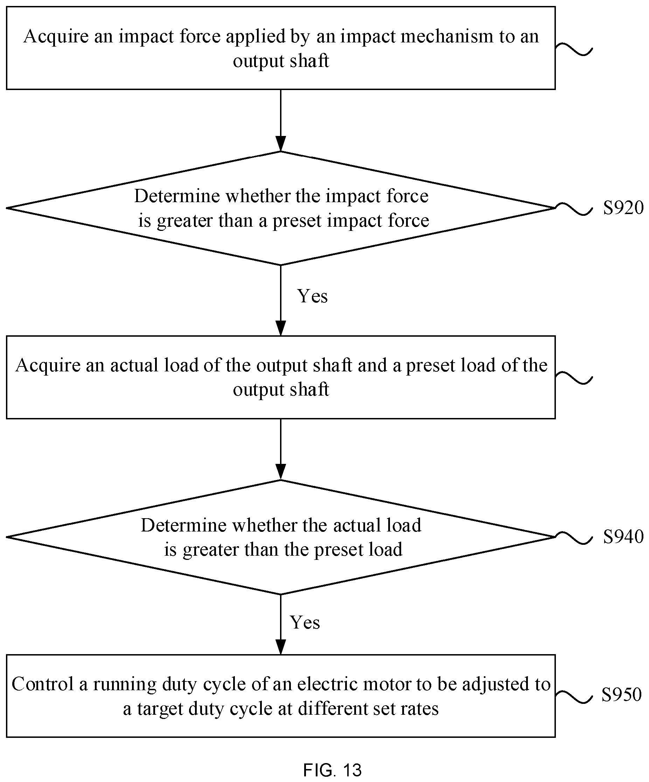

Based on the same inventive concept, this example further provides a control method of the impact screwdriver 100. FIG. 13 is a flowchart of the control method of the impact screwdriver 100 according to an example of the present invention. Referring to FIG. 13, the control method of the impact screwdriver 100 includes the steps below.

In S910, the impact force applied to the output shaft by the impact mechanism 15 is acquired.

When the load is applied to the impact screwdriver 100, causing the output shaft to stop rotating completely, the impact mechanism 15 applies the impact force to the output shaft so that the output shaft overcomes the resistance of the load to continue rotating. In some examples, the impact force applied to the output shaft by the impact mechanism 15 may be determined according to a commutation-related parameter of the electric motor.

In S920, it is determined whether the impact force is greater than a preset impact force. If yes, S930 is performed.

The preset impact force may be an impact force that can cause the output shaft to overcome the resistance of the load to continue rotating.

In S930, the actual load of the output shaft and the preset load of the output shaft are acquired.

The preset load may be determined according to the torque values provided by the output shaft in the different running states.

In S940, it is determined whether the actual load is greater than the preset load. If yes, S950 is performed.

In S950, the running duty cycle of the electric motor 12 is controlled, according to the running state of the impact screwdriver 100, to be adjusted to the target duty cycle at the different set rates.

Each of the different set rates and the target duty cycle may be determined according to the running state of the impact screwdriver 100. In an example, the running states of the impact screwdriver 100 include the multiple different running states of the at least one of the gear, the rotation direction, and the remaining electric quantity of the power supply. The set rates are different in the different running states. The target duty cycles are different in the different running states. In some examples, the target duty cycle is less than or equal to 50%.

For example, when the impact mechanism 15 applies the impact force to the output shaft 131, the actual load of the output shaft 131 is acquired. If the actual load is greater than the preset load, the actual load of the output shaft 131 is relatively heavy. The electric motor cannot provide the sufficient impact force at the rotational speed controlled by the current running duty cycle, which results in the risk that the impact screwdriver 100 stalls. Therefore, the running duty cycle of the electric motor may be controlled, according to the running state of the impact screwdriver 100, to be adjusted to the target duty cycle at the different set rates.

In this example, when the impact force applied to the output shaft 131 by the impact mechanism 15 is greater than the preset impact force, the actual load of the output shaft 131 is acquired. When the actual load is greater than the preset load, the running duty cycle of the electric motor is controlled, according to the running state of the impact screwdriver 100, to be adjusted to the target duty cycle at the set rates. Thus, when the impact screwdriver 100 bears the relatively heavy actual load, the running duty cycle of the electric motor is increased at the different set rates so that the impact screwdriver 100 is prevented from stalling in the impact process. In addition, the running duty cycle of the electric motor is adjusted to the target duty cycle at the different set rates, instead of directly adjusting the running duty cycle of the electric motor to the target duty cycle. Thus, the impact screwdriver 100 can run smoothly, which is conducive to improving the operation stability and the use experience of the user.

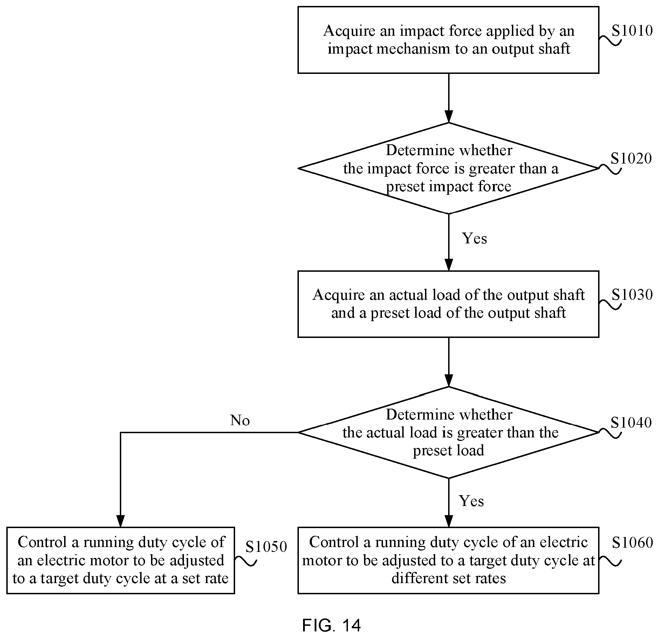

Optionally, FIG. 14 is another flowchart of the control method of the impact screwdriver 100 according to an example of the present invention. Based on the preceding example, this example further provides the step about how to control the electric motor 12 to run when the running duty cycle of the electric motor 12 is greater than or equal to the target duty cycle. Referring to FIG. 14, the control method specifically includes the steps below.

In S1010, the impact force applied to the output shaft 131 by the impact mechanism 15 is acquired.

In S1020, it is determined whether the impact force is greater than the preset impact force. If yes, S1030 is performed.

In S1030, the actual load of the output shaft 131 and the preset load of the output shaft 131 are acquired.

In S1040, it is determined whether the actual load is greater than the preset load. If not, S1050 is performed, and if yes, S1060 is performed.

In S1050, the electric motor 12 is controlled to run at the current running duty cycle.

In S1060, the running duty cycle of the electric motor 12 is controlled, according to the running state of the impact screwdriver 100, to be adjusted to the target duty cycle at the different set rates.

For example, when the impact force applied to the output shaft 131 by the impact mechanism 15 is greater than the preset impact force, the actual load of the output shaft 131 is acquired. If the actual load is greater than the preset load, the actual load of the output shaft 131 is relatively heavy. The electric motor cannot provide the sufficient impact force at the rotational speed controlled by the current running duty cycle, which results in the risk that the impact screwdriver 100 stalls. Therefore, the running duty cycle of the electric motor may be controlled, according to the running state of the impact screwdriver 100, to be adjusted to the target duty cycle at the different set rates. On the contrary, if the actual load is less than or equal to the preset load, the actual load of the output shaft 131 is relatively light. The electric motor can provide the sufficient impact force at the rotational speed controlled by the current running duty cycle. Therefore, the electric motor 12 may be controlled to continue running at the current running duty cycle so that the user has better use experience.

In an optional example, the control method of the impact screwdriver 100 further includes: when the current running duty cycle of the electric motor 12 is greater than or equal to the target duty cycle, controlling the electric motor 12 to run at the current running duty cycle.

For example, the running duty cycle of the electric motor 12 is positively correlated with the stroke amount of the operation member 161. When the stroke amount of the operation member reaches the maximum value, the running duty cycle of the electric motor also reaches the maximum value in the current running state. In this case, the running duty cycle of the electric motor, that is, the current running duty cycle of the electric motor, is greater than or equal to the target duty cycle. When the current running duty cycle of the electric motor is greater than or equal to the target duty cycle, the electric motor is controlled to run at the current running duty cycle, that is, the electric motor is controlled to run according to the operation instruction of the user so that the impact screwdriver 100 runs according to the operation instruction of the user and the use experience of the user can be further improved.

In this example, when the impact force applied to the output shaft 131 by the impact mechanism 15 is greater than the preset impact force, the actual load of the output shaft 131 is acquired. Thus, when the actual load is greater than the preset load, the running duty cycle of the electric motor is controlled to be adjusted to the target duty cycle at the set rates, and when the actual load is less than or equal to the preset load, the electric motor 12 is controlled to continue running at the current running duty cycle. In this manner, the user has better use experience.

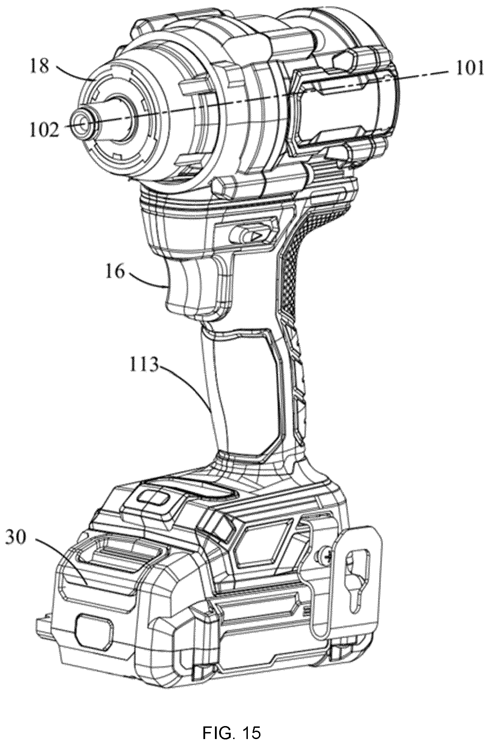

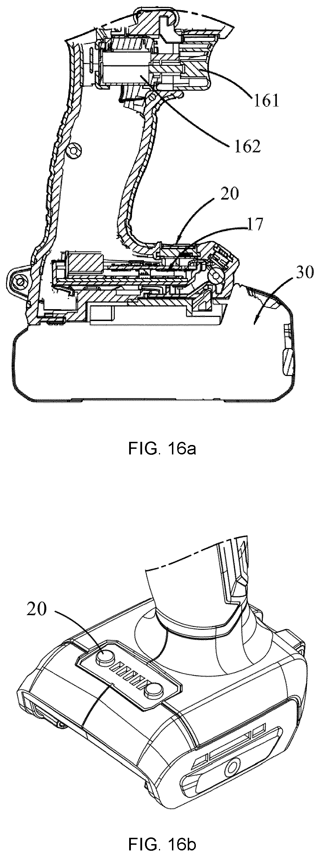

As shown in FIGS. 15 to 18b, in this example, the impact screwdriver 100 includes an illumination assembly 18 configured to provide illumination rays for the outside of the housing 11. The illumination assembly 18 includes at least one illumination element disposed substantially in the shape of a ring using the axis of the output shaft 131 as an axis. In this example, the illumination assembly 18 includes multiple illumination elements arranged in the shape of one ring. In some examples, the illumination assembly 18 includes one light emitter, for example, a light bead. One illumination element is formed by the light emitter and a ring-shaped reflector or another ring-shaped light divergence element. In some examples, the illumination assembly 18 includes one ring-shaped illumination element. In other alternative examples, the illumination elements are arranged in the shape of multiple rings. The illumination elements may have different colors so that the illumination rays are polychromatic. In other alternative examples, the illumination elements may have the same color, for example, white, green, or red so that the illumination rays are monochromatic. In some examples, each of the illumination elements has different color temperatures or an adjustable color temperature.

In some examples, the illumination assembly 18 is further configured to provide failure prompt light having different frequencies and different brightness when the impact screwdriver 100 fails. For example, when the electric motor 12 fails, the illumination assembly 18 strobes with a certain frequency and certain brightness to prompt the user that the electric motor 12 fails. In some examples, the illumination assembly 18 is further configured to provide failure prompt light having different colors when the impact screwdriver 100 fails.

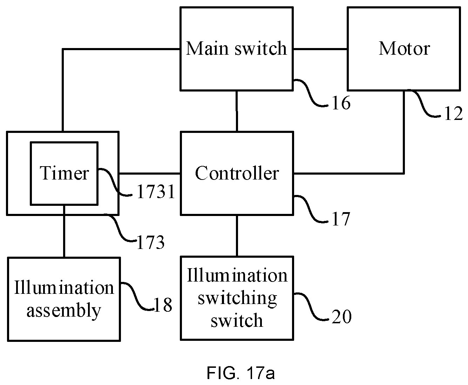

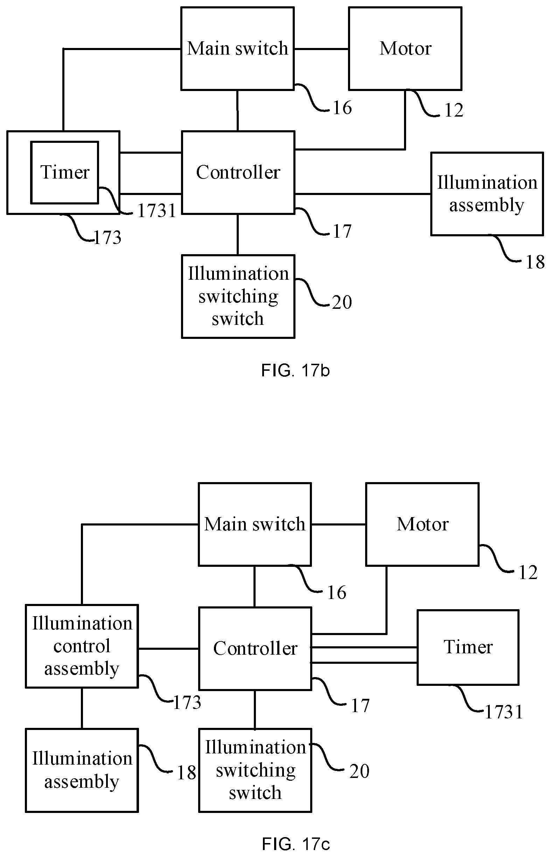

In an optional example, FIG. 17a is a block diagram of the impact screwdriver 100 according to this example, and FIG. 17b is another block diagram of the impact screwdriver 100 according to this example. Referring to FIG. 17a or FIG. 17b, the impact screwdriver 100 may have multiple operation modes. The operation modes may include a first rotational speed mode, a second rotational speed mode, and a third rotational speed mode where the output shaft 131 has different maximum rotational speeds. The operation modes may include a fast speed-up mode, a normal speed-up mode, and a slow speed-up mode where the output shaft 131 speeds up at different speeds.

The impact screwdriver 100 further includes an illumination control assembly 173 connected to the main switch 16 and including a timer 1731. When the main switch 16 is activated, an illumination control signal is sent to the illumination control assembly 173 so that the illumination assembly 18 is controlled to start. When the main switch 16 is released, a timing activation signal is sent to the illumination control assembly 173 so that the timer 1731 starts timing. The illumination assembly 18 is controlled to be off when the length of a timing period reaches the length of a preset delay period. The illumination control assembly 173 includes a first delay mode and a second delay mode that correspond to different preset delay periods.

An illumination switching switch 20 is configured to be operated to switch the setting of an operation mode and the setting of a delay mode.

In some examples, when the main switch 16 is activated, the illumination control assembly 173 does not necessarily start the illumination assembly 18. When the main switch 16 is activated, the illumination control assembly 173 may send a timing start signal to the timer 1731 so that the illumination assembly 18 is caused to be on after being delayed for one preset period. In some examples, the user sets, through the illumination switching switch 20, whether the illumination control assembly 173 starts the illumination assembly 18 when the main switch 16 is activated.

The controller 17 is further electrically connected to the illumination control assembly 173, the main switch 16, and the illumination switching switch 20 separately. When the duration for which the illumination switching switch 20 is operated is longer than a preset operation period, the controller 17 switches any of the setting of the operation mode and the setting of the delay mode.

In this example, the impact screwdriver 100 has both the illumination switching switch 20 and the switching switch 163 so that it is convenient for the user to use the impact screwdriver 100 without changing use habits. In some examples, the operation modes may include a forward rotation mode and a reverse rotation mode. The switching switch 163 and the illumination switching switch 20 are combined into the same switch so that the number of interactive buttons of the impact screwdriver 100 is reduced.

In this example, a preset delay period in the first delay mode and a preset delay period in the second delay mode may be set according to the use habits of the user.

In an illustrative example, the preset delay period in the first delay mode is a first preset delay period. For example, the first preset delay period may be 10s. In another illustrative example, the preset delay period in the second delay mode is a second preset delay period. For example, the second preset delay period may be 10 mins.

In an optional example, the preset delay period in the first delay mode is t1, and the preset delay period in the second delay mode is t2, where t1 is longer than or equal to 0s and shorter than or equal to 10s, and t2 is longer than or equal to 10s and shorter than or equal to 10 mins.

In an example, the preset operation period refers to a threshold operation period for switching the setting of the operation mode and/or the setting of the delay mode. For example, when the preset operation period is 1s, the controller 17 switches the setting of the delay mode when the duration for which the illumination switching switch 20 is operated is longer than 1s.

In a working process, when the impact screwdriver 100 is powered on to start, the impact screwdriver 100 may be in a default delay mode. For example, the default delay mode may be the first delay mode. When the user presses the main switch 16, that is, the main switch 16 is activated, the illumination control assembly 173 receives the illumination control signal. Thus, the illumination assembly 18 is started to provide the illumination rays for the outside of the housing 11. When the user releases the main switch 16, that is, the main switch 16 is released, the illumination control assembly 173 receives the timing activation signal, and the timer 1731 starts timing. Thus, the illumination assembly 18 is controlled to be off when the length of the timing period reaches the length of the preset delay period in the first delay mode. In an example, when relatively long-period illumination is required after the user releases the main switch 16, the duration for which the illumination switching switch 20 is operated may be controlled to be longer than the preset operation period. For example, the duration for which the illumination switching switch 20 is operated is controlled to be longer than 1s. Thus, the controller 17 controls the illumination control assembly 173 to enter the second delay mode from the default delay mode. For example, when the user releases the illumination switching switch 20, the illumination control assembly 173 receives the timing start signal, and the timer 1731 restarts timing. Thus, when the length of the timing period reaches the length of the preset delay period in the second delay mode, the illumination assembly 18 is controlled to be off. In this manner, the illumination switching switch 20 can also be used as an illumination control switch, and the user can select, according to requirements, the delay period during which the illumination assembly is delayed to be off.

In an example, as shown in FIG. 17a, the controller 17 may include a switching signal input terminal, an operation mode output terminal, and a delay mode output terminal. The output terminal of the illumination switching switch 20 is electrically connected to the switching signal input terminal of the controller 17. A mode switching output terminal of the controller 17 is electrically connected to a control input terminal of the electric motor 12. The delay mode output terminal of the controller 17 is electrically connected to an activation control terminal of the illumination control assembly 173. An illumination control terminal of the illumination control assembly 173 is electrically connected to the input terminal of the illumination assembly 18. A timing control terminal of the illumination control assembly 173 is electrically connected to an illumination signal output terminal of the main switch 16. A control signal terminal of the main switch 16 is electrically connected to the controller 17. In this case, when the user operates the illumination switching switch 20 to switch modes, the illumination switching switch 20 outputs a corresponding switching control signal to the controller 17 such that the controller 17 provides an operation mode control signal for the electric motor 12 and/or provides a delay control signal for the illumination control assembly 173 according to the switching control signal. In addition, when the user presses the main switch 16, the main switch 16 may output the illumination control signal to the illumination control assembly 173 such that the illumination control assembly 173 outputs a turn-on control signal to the illumination assembly 18, and the illumination assembly 18 provides the illumination rays for the outside. Moreover, when the user releases the main switch 16, the main switch 16 may output a timing control signal to the illumination control assembly 173 such that the timer 1731 in the illumination control assembly 173 starts timing. When the length of the timing period reaches the length of the preset delay period, the illumination control assembly 173 outputs a turn-off control signal to the illumination assembly 18, and the illumination assembly 18 stops providing the illumination rays for the outside.

In another example, as shown in FIG. 17b, the controller 17 includes the switching signal input terminal, the operation mode output terminal, the delay mode output terminal, a timing period input terminal, an illumination signal input terminal, and an illumination control terminal. The output terminal of the illumination switching switch 20 is electrically connected to the switching signal input terminal of the controller 17. The operation mode output terminal of the controller 17 is electrically connected to the control input terminal of the electric motor 12. A control output terminal of the main switch 16 is electrically connected to the illumination signal input terminal of the controller 17. The delay mode output terminal of the controller 17 is electrically connected to the activation control terminal of the illumination control assembly 173. A timing signal output terminal of the illumination control assembly 173 is electrically connected to the timing period input terminal of the controller 17. The illumination control terminal of the controller 17 is electrically connected to the input terminal of the illumination assembly 18. In this case, when the user operates the illumination switching switch 20 to switch the modes, the illumination switching switch 20 outputs the corresponding switching control signal to the controller 17 such that the controller 17 provides the operation mode control signal for the electric motor 12 and/or provides the delay control signal for the illumination control assembly 173 according to the switching control signal. In addition, when the user presses the main switch 16, the main switch 16 may output the illumination control signal to the controller 17 such that the controller 17 outputs the turn-on control signal to the illumination assembly 18, and the illumination assembly 18 provides the illumination rays for the outside. Moreover, when the user releases the main switch 16, the main switch 16 may output the timing control signal to the controller 17 such that the controller 17 outputs the timing start signal to the illumination control assembly 173, and the timer 1731 in the illumination control assembly 173 starts timing and feeds back the timing period to the controller 17 in real time. When the length of the timing period received by the controller 17 reaches the length of the preset delay period, the illumination control assembly 173 outputs the turn-off control signal to the illumination assembly 18, and the illumination assembly 18 stops providing the illumination rays for the outside.

In this example, the illumination control assembly 173 is connected to the main switch 16 and includes the timer. Thus, when the main switch is activated, the illumination control signal is sent to the illumination control assembly so that the illumination assembly is started. Correspondingly, when the main switch is released, the timing activation signal is sent to the illumination control assembly so that the timer starts timing, and when the length of the timing period reaches the length of the preset delay period, the illumination assembly is controlled to be off. Thus, the illumination assembly is delayed to be off. The illumination control assembly includes the first delay mode and the second delay mode that correspond to the different preset delay periods so that the user can switch the setting of the operation mode and the setting of the delay mode through the switching switch. In addition, the controller 17 is electrically connected to the illumination control assembly, the main switch, and the switching switch separately. Thus, when the duration for which the switching switch is operated is longer than the preset operation period, the controller 17 switches any of the setting of the operation mode and the setting of the delay mode. In this manner, the switching switch has two uses so that when the user operates the switching switch for different durations, the switching switch implements different functions. Thus, the user can select an illumination delay period according to the requirements. In addition, the switching switch has the two uses so that the number of buttons of the impact screwdriver 100 can be reduced, thereby facilitating the miniaturization of the impact screwdriver 100.

In an optional example, the timer 1731 may be part of the illumination control assembly 173. The illumination control assembly 173 may also include other structures. In this case, each of the timer 1731 and the other structures of the illumination control assembly 173 may be electrically connected to the controller 17 directly so that the core of the present application is implemented.

In another optional example, the impact screwdriver 100 has the multiple operation modes. The operation modes may include the forward rotation mode and the reverse rotation mode. Alternatively, the operation modes may include the first rotational speed mode, the second rotational speed mode, and the third rotational speed mode where the output shaft 131 has the different rotational speeds.

The impact screwdriver 100 further includes the illumination control assembly 173 connected to the main switch 16. When the main switch 16 is activated, the illumination control assembly 173 controls the illumination assembly 18 to start. When the main switch 16 is released, the illumination control assembly 173 controls the illumination assembly 18 to be off after being delayed for the preset period. The illumination control assembly 173 may include multiple illumination modes. The illumination modes may include, but are not limited to, the first delay mode and the second delay mode that have the different preset delay periods.

The illumination switching switch 20 can be further configured to be operated to switch the setting of the operation mode and the setting of an illumination mode.

The controller 17 is further electrically connected to the illumination control assembly 173, the main switch 16, and the illumination switching switch 20 separately.

The timer 1731 is connected to the controller 17. When the illumination switching switch 20 is operated, the timer 1731 is caused to start timing. When the illumination switching switch 20 is released, the timer 1731 stops timing. When the timing period of the timer is longer than the preset operation period, the controller 17 switches any of the setting of the operation mode and the setting of the delay mode.

The preset operation period t is longer than or equal to 0.8s and shorter than or equal to 3s.

In this example, the timer 1731 performs timing operations on the preset operation period t, the preset delay period t1, and the preset delay period t2 at the same time so that the impact screwdriver 100 has a more compact control circuit. In some examples, a first counter may be configured to control the preset operation period t separately, and a second counter may be configured to control the preset delay period t1 and the preset delay period t2 separately. In some examples, the first counter, the second counter, and a third timer may be configured to control the preset operation period t, the preset delay period t1, and the preset delay period t2, respectively. It is to be explained that the timer 1731 in this example may be a physical timing element, a timing unit or a timing functional module in a chip for implementing a timing control function, or a timing control algorithm.

In an illustrative example, FIG. 17c is another block diagram of the impact screwdriver 100 according to this example. As shown in FIG. 7, the controller 17 includes the switching signal input terminal, a timing control output terminal, a timing signal input terminal, the operation mode output terminal, and an illumination mode output terminal. The output terminal of the illumination switching switch 20 is electrically connected to the switching signal input terminal of the controller 17. The timing control output terminal of the controller 17 is electrically connected to a control terminal of the timer 1731. The output terminal of the timer 1731 is electrically connected to the timing signal input terminal of the controller 17. The operation mode output terminal of the controller 17 is electrically connected to the control input terminal of the electric motor 12. The illumination mode output terminal of the controller 17 is electrically connected to the activation control terminal of the illumination control assembly 173. A control output terminal of the illumination control assembly 173 is electrically connected to the input terminal of the illumination assembly 18. The timing control terminal of the illumination control assembly 173 is electrically connected to the illumination signal output terminal of the main switch 16. Thus, when the illumination switching switch 20 is pressed, a switching start signal is provided for the controller 17 so that the controller 17 outputs the timing activation signal to the timer 1731 to activate the timer 1731 and the timer 1731 starts timing. At the same time, the controller 17 also receives the timing period of the timer 1731 in real time. When the illumination switching switch 20 is released, a switching stop signal is provided for the controller 17 so that the controller 17 outputs a timing stop signal to the timer 1731 to cause the timer 1731 to stop timing. The controller 17 compares the timing period outputted by the timer 1731 currently with the preset operation period. If the timing period is longer than the preset operation period, a current mode switching control signal is sent to the electric motor 12 or the illumination control assembly 173 so that the delay mode of the illumination control assembly 173 is controlled. That is, after the main switch 16 is released, the illumination control assembly 173 controls the period during which the illumination assembly 18 is delayed to be off. Alternatively, the rotation direction (the forward rotation direction or the reverse rotation direction) and/or rotational speed of the electric motor 12 are configured according to a setting. When the main switch 16 is activated, the electric motor 12 is caused to work with this setting.

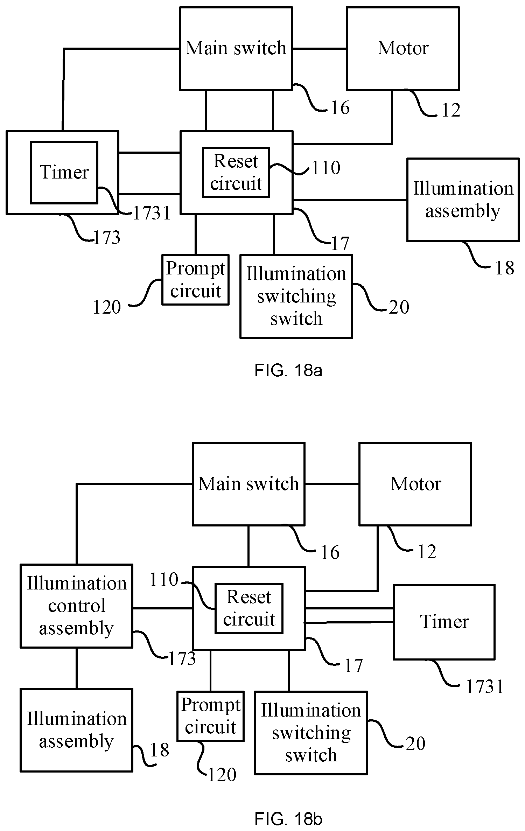

In an optional example, FIG. 18a is another block diagram of the impact screwdriver 100 according to this example, and FIG. 18b is another block diagram of the impact screwdriver 100 according to this example. As shown in FIG. 18a or FIG. 18b, based on the preceding example, the impact screwdriver 100 further includes a reset circuit 110 electrically connected to the controller 17. When the main switch 16 is activated or the illumination switching switch 20 is operated, the reset circuit 110 sends a timing reset signal to the controller 17 so that the controller 17 controls the reset of the timing period of the timer 1731.

For example, if the relatively long-period illumination is required after the user releases the main switch 16, the duration for which the illumination switching switch 20 is operated may be controlled to be longer than the preset operation period. For example, the duration for which the illumination switching switch 20 is operated is controlled to be longer than 1s. Thus, the controller 17 controls the illumination control assembly 173 to enter the second delay mode. In this case, if the illumination switching switch 20 is pressed, the reset circuit 110 provides the timing reset signal for the controller 17 so that the controller 17 controls the timing period of the timer 1731 to be set to zero. The timer 1731 starts timing from 0s and feeds back the timing period to the controller 17. Thus, the controller 17 can obtain the timing period, that is, the time when the illumination switching switch 20 is pressed, thereby determining whether to switch the delay mode. Alternatively, in the second delay mode, when the user activates the main switch 16, the reset circuit 110 provides the timing reset signal for the controller 17. The controller 17 controls the timing period of the timer 1731 to be reset to zero. In addition, when the user releases the main switch 16, the timer 1731 starts timing from 0s. Thus, when the length of the timing period reaches the length of the preset delay period in the second delay mode, the illumination assembly 18 is controlled to be off. The reset circuit 110 may be integrated in the controller 17 so that the number of structures of the impact screwdriver 100 can be reduced, thereby reducing the volume of the impact screwdriver 100.

In an optional example, with continued reference to FIG. 8 or FIG. 9, the impact screwdriver 100 further includes a prompt circuit 120 electrically connected to the controller 17. When any of the setting of the operation mode and the setting of the delay mode is switched, the controller 17 controls the prompt circuit 120 to perform a switching prompt. In this case, the controller 17 further includes a prompt output terminal electrically connected to the prompt circuit 120.

The switching prompt may be the prompt that an indicator light is on or off or the prompt that an indicator light flickers. In this case, the prompt circuit 120 includes at least the indicator light. Alternatively, the switching prompt may be an audio prompt or the like. In this case, the prompt circuit 120 should include at least an audio generator. For example, the prompt circuit 120 includes the indicator light. When the user operates the illumination switching switch 20 to switch the setting of the operation mode, the controller 17 may control the indicator light of the prompt circuit 120 to be always on, so as to prompt the user that the setting of the operation mode has been switched. When the setting of the delay mode is switched, the controller 17 may control the indicator light of the prompt circuit 120 to flicker with a set frequency, so as to prompt the user that the setting of the delay mode has been switched.

In an optional example, the impact screwdriver 100 further includes: a power supply coupling portion connected to the housing 11; and a direct current power supply accommodated in or connected to the power supply coupling portion and configured to provide a direct current power supply signal so that the power supply coupling portion can protect the battery pack 30.

In an optional example, the illumination switching switch 20 and the controller 17 are disposed at the power supply coupling portion. Thus, the illumination switching switch 20 and the controller 17 can be relatively adjacent to the direct current power supply 30 so that the level of integration of the impact screwdriver 100 can be improved, thereby facilitating the miniaturization of the impact screwdriver 100.

In an optional example, the illumination control assembly 173 is further connected to the illumination switching switch 20. In a timing process of the timer 1731, if the illumination switching switch 20 is operated, the illumination control assembly 173 controls the illumination assembly 18 to be off.

For example, if the user does not need the illumination assembly 18 to provide the illumination rays before the length of the timing period reaches the length of the preset delay period, the user may operate the illumination switching switch 20 again, and the illumination control assembly 173 controls the illumination assembly 18 to be off so that the power consumption of the impact screwdriver 100 can be reduced. Thus, the impact screwdriver 100 can satisfy various illumination requirements of the user, and the human-computer interaction performance of the impact screwdriver 100 is improved.

In an optional example, the illumination control assembly 173 is disposed on a circuit board, and a dedicated control chip, for example, a single-chip microcomputer or a microcontroller unit (MCU), is used in the illumination control assembly 173. The illumination control assembly 173 may be a module in the controller 17. In some examples, the illumination control assembly 173 is disposed on a separate circuit board. In some examples, the illumination control assembly 173 and the controller 17 are integrated on the same circuit board. Thus, the level of integration of the impact screwdriver 100 is further improved, which facilitates the miniaturization of the impact screwdriver 100.

## Claims

1. An impact tool, comprising:
an electric motor (12) comprising a drive shaft (121) rotating about a first axis (101);
an output shaft (131) for outputting torque to an outside;
an impact mechanism (15) for applying an impact force to the output shaft (131), wherein the impact mechanism (15) comprises an impact block (152) driven by the drive shaft (121) and a hammer anvil (153) receiving an impact from the impact block (152), and the hammer anvil (153) is formed with or connected to the output shaft (131); and
a controller (17) configured to control the electric motor (12);
wherein the controller (17) is configured to:
when the impact tool is in a low-speed mode and it is detected that the impact mechanism (15) applies the impact force to the output shaft (131), perform the following operations periodically: determining that the impact mechanism (15) impacts a preset number of times and controlling the electric motor (12) to shut down for a preset period and then restart; wherein
the impact tool further comprises a trigger switch configured to adjust a rotational speed of the electric motor (12), wherein the controller (17) is configured to determine, according to a stroke signal of the trigger switch, that a trigger stroke is within a preset stroke range and determine that the impact tool is in the low-speed mode;
wherein the controller (17) is specifically configured to:
when the trigger stroke exceeds the preset stroke range, determine that the impact tool is in a normal mode and control the electric motor (12) to continuously perform a rotational output so that the impact mechanism (15) impacts on the output shaft (131) periodically.

2. The power tool according to claim 1, wherein the controller (17) is specifically configured to:
when the trigger stroke exceeds the preset stroke range, determine that the impact tool is in a normal mode, determine a required duty cycle based on the trigger stroke, and output a drive signal with the required duty cycle to the electric motor (12), so as to control the electric motor to continuously perform a rotational output at the required duty cycle.

3. The impact tool according to claim 1, wherein the controller (17) is configured to, when the impact tool is in the low-speed mode, control the electric motor (12) to start with a preset acceleration value.

4. The impact tool according to claim 3, wherein the controller (17) is configured to, when the impact tool runs with no load, control the electric motor (12) to start with a first acceleration value, wherein the preset acceleration value is greater than the first acceleration value.

5. The impact tool according to claim 1, comprising a battery pack (30) configured to power the electric motor (12).

6. The impact tool according to claim 1, wherein the controller (17) is configured to, when the electric motor (12) shuts down for the preset period, determine a target duty cycle of the electric motor (12) based on a voltage of the battery pack (30) and control the electric motor (12) to start running at the target duty cycle.

7. The impact tool according to claim 6, wherein the target duty cycle is less than or equal to 40%.

8. The impact tool according to claim 1, wherein the controller (17) is configured to acquire a commutation state of the electric motor (12) and determine a number of impacts based on the commutation state of the electric motor.

9. The impact tool according to claim 1, wherein the controller (17) is specifically configured to control windings of the electric motor (12) to be short-circuited to brake the electric motor (12) and start the electric motor (12) after the preset period.

10. The impact tool according to claim 1, wherein the preset number of times comprises one.

11. The impact tool according to claim 1, wherein the preset period is positively correlated with the trigger stroke.

12. The impact tool according to claim 11, wherein the preset period is shorter than or equal to 500 ms.

## Patentansprüche

1. Schlagwerkzeug, umfassend:
einen Elektromotor (12), der eine um eine erste Achse (101) rotierende Antriebswelle (121) umfasst;
eine Abtriebswelle (131) zur Abgabe eines Drehmoments nach außen;
einen Schlagmechanismus (15) zum Aufbringen einer Schlagkraft auf die Abtriebswelle (131), wobei der Schlagmechanismus (15) einen von der Antriebswelle (121) angetriebenen Schlagblock (152) und einen Hammeramboss (153), der einen Schlag von dem Schlagblock (152) empfängt, umfasst, und der Hammeramboss (153) mit der Abtriebswelle (131) ausgebildet oder mit dieser verbunden ist; und
eine Steuerung (17), die zum Steuern des Elektromotors (12) eingerichtet ist;
wobei die Steuerung (17) dazu eingerichtet ist:
wenn sich das Schlagwerkzeug in einem Niederdrehzahlmodus befindet und erkannt wird, dass der Schlagmechanismus (15) die Schlagkraft auf die Abtriebswelle (131) aufbringt, periodisch die folgenden Vorgänge durchzuführen: Feststellen, dass der Schlagmechanismus (15) eine voreingestellte Anzahl von Schlägen ausgeführt hat, und Steuern des Elektromotors (12) derart, dass er für einen voreingestellten Zeitraum abgeschaltet und anschließend wieder gestartet wird; wobei
das Schlagwerkzeug ferner einen Abzugsschalter umfasst, der zum Einstellen einer Drehzahl des Elektromotors (12) eingerichtet ist, wobei die Steuerung (17) dazu eingerichtet ist, anhand eines Hubsignals des Abzugsschalters festzustellen, dass ein Abzugshub innerhalb eines voreingestellten Hubbereichs liegt, und festzustellen, dass sich das Schlagwerkzeug in dem Niederdrehzahlmodus befindet;
wobei die Steuerung (17) spezifisch dazu eingerichtet ist:
wenn der Abzugshub den voreingestellten Hubbereich überschreitet, festzustellen, dass sich das Schlagwerkzeug in einem Normalmodus befindet, und den Elektromotor (12) so zu steuern, dass er kontinuierlich eine Drehbewegung abgibt, sodass der Schlagmechanismus (15) periodisch auf die Abtriebswelle (131) schlägt.

2. Elektrowerkzeug nach Anspruch 1, wobei die Steuerung (17) spezifisch dazu eingerichtet ist:
wenn der Abzugshub den voreingestellten Hubbereich überschreitet, festzustellen, dass sich das Schlagwerkzeug in einem Normalmodus befindet, ein erforderliches Tastverhältnis auf Grundlage des Abzugshubs zu bestimmen und ein Ansteuersignal mit dem erforderlichen Tastverhältnis an den Elektromotor (12) auszugeben, um den Elektromotor so zu steuern, dass er bei dem erforderlichen Tastverhältnis kontinuierlich eine Drehbewegung abgibt.

3. Schlagwerkzeug nach Anspruch 1, wobei die Steuerung (17) dazu eingerichtet ist, wenn sich das Schlagwerkzeug in dem Niederdrehzahlmodus befindet, den Elektromotor (12) so zu steuern, dass er mit einem voreingestellten Beschleunigungswert anläuft.

4. Schlagwerkzeug nach Anspruch 3, wobei die Steuerung (17) dazu eingerichtet ist, wenn das Schlagwerkzeug ohne Last läuft, den Elektromotor (12) so zu steuern, dass er mit einem ersten Beschleunigungswert anläuft, wobei der voreingestellte Beschleunigungswert größer als der erste Beschleunigungswert ist.

5. Schlagwerkzeug nach Anspruch 1, umfassend einen Akkupack (30), der zur Stromversorgung des Elektromotors (12) eingerichtet ist.

6. Schlagwerkzeug nach Anspruch 1, wobei die Steuerung (17) dazu eingerichtet ist, wenn der Elektromotor (12) für den voreingestellten Zeitraum abgeschaltet wird, ein Zieltastverhältnis des Elektromotors (12) auf Grundlage einer Spannung des Akkupacks (30) zu bestimmen und den Elektromotor (12) so zu steuern, dass er den Betrieb bei dem Zieltastverhältnis aufnimmt.

7. Schlagwerkzeug nach Anspruch 6, wobei das Zieltastverhältnis kleiner als oder gleich 40 % ist.

8. Schlagwerkzeug nach Anspruch 1, wobei die Steuerung (17) dazu eingerichtet ist, einen Kommutierungszustand des Elektromotors (12) zu erfassen und eine Anzahl von Schlägen auf Grundlage des Kommutierungszustands des Elektromotors zu bestimmen.

9. Schlagwerkzeug nach Anspruch 1, wobei die Steuerung (17) spezifisch dazu eingerichtet ist, Wicklungen des Elektromotors (12) so zu steuern, dass sie zum Bremsen des Elektromotors (12) kurzgeschlossen werden, und den Elektromotor (12) nach dem voreingestellten Zeitraum zu starten.

10. Schlagwerkzeug nach Anspruch 1, wobei die voreingestellte Anzahl die Zahl eins umfasst.

11. Schlagwerkzeug nach Anspruch 1, wobei der voreingestellte Zeitraum positiv mit dem Abzugshub korreliert.

12. Schlagwerkzeug nach Anspruch 11, wobei der voreingestellte Zeitraum kürzer als oder gleich 500 ms ist.

## Revendications

1. Outil à chocs, comprenant :
un moteur électrique (12) comprenant un arbre d'entraînement (121) tournant autour d'un premier axe (101) ;
un arbre de sortie (131) destiné à délivrer un couple vers l'extérieur ;
un mécanisme de frappe (15) destiné à appliquer une force de frappe à l'arbre de sortie (131), dans lequel le mécanisme de frappe (15) comprend un bloc de frappe (152) entraîné par l'arbre d'entraînement (121) et une enclume de frappe (153) recevant un choc du bloc de frappe (152), et l'enclume de frappe (153) est formée avec l'arbre de sortie (131) ou reliée à celui-ci ; et
un dispositif de commande (17) configuré pour commander le moteur électrique (12) ;
dans lequel le dispositif de commande (17) est configuré pour :
lorsque l'outil à chocs est dans un mode à faible vitesse et qu'il est détecté que le mécanisme de frappe (15) applique la force de frappe à l'arbre de sortie (131), effectuer périodiquement les opérations suivantes : déterminer que le mécanisme de frappe (15) a effectué un nombre prédéfini de frappes et commander le moteur électrique (12) de manière qu'il s'arrête pendant une période prédéfinie puis redémarre ; dans lequel
l'outil à chocs comprend en outre un interrupteur à gâchette configuré pour régler une vitesse de rotation du moteur électrique (12), dans lequel le dispositif de commande (17) est configuré pour déterminer, en fonction d'un signal de course de l'interrupteur à gâchette, qu'une course de gâchette se situe dans une plage de course prédéfinie et pour déterminer que l'outil à chocs est dans le mode à faible vitesse ;
dans lequel le dispositif de commande (17) est spécifiquement configuré pour :
lorsque la course de gâchette dépasse la plage de course prédéfinie, déterminer que l'outil à chocs est dans un mode normal et commander le moteur électrique (12) pour qu'il produise une rotation continue, de sorte que le mécanisme de frappe (15) frappe périodiquement l'arbre de sortie (131).

2. Outil électrique selon la revendication 1, dans lequel le dispositif de commande (17) est spécifiquement configuré pour :
lorsque la course de gâchette dépasse la plage de course prédéfinie, déterminer que l'outil à chocs est dans un mode normal, déterminer un rapport cyclique requis sur la base de la course de gâchette et délivrer au moteur électrique (12) un signal de commande présentant le rapport cyclique requis, afin de commander le moteur électrique pour qu'il produise une rotation continue au rapport cyclique requis.

3. Outil à chocs selon la revendication 1, dans lequel le dispositif de commande (17) est configuré pour, lorsque l'outil à chocs est dans le mode à faible vitesse, commander le moteur électrique (12) de manière qu'il démarre avec une valeur d'accélération prédéfinie.

4. Outil à chocs selon la revendication 3, dans lequel le dispositif de commande (17) est configuré pour, lorsque l'outil à chocs fonctionne à vide, commander le moteur électrique (12) de manière qu'il démarre avec une première valeur d'accélération, dans lequel la valeur d'accélération prédéfinie est supérieure à la première valeur d'accélération.

5. Outil à chocs selon la revendication 1, comprenant un bloc-batterie (30) configuré pour alimenter le moteur électrique (12).

6. Outil à chocs selon la revendication 1, dans lequel le dispositif de commande (17) est configuré pour, lorsque le moteur électrique (12) s'arrête pendant la période prédéfinie, déterminer un rapport cyclique cible du moteur électrique (12) sur la base d'une tension du bloc-batterie (30) et commander le moteur électrique (12) de manière qu'il commence à fonctionner au rapport cyclique cible.

7. Outil à chocs selon la revendication 6, dans lequel le rapport cyclique cible est inférieur ou égal à 40 %.

8. Outil à chocs selon la revendication 1, dans lequel le dispositif de commande (17) est configuré pour acquérir un état de commutation du moteur électrique (12) et déterminer un nombre de frappes sur la base de l'état de commutation du moteur électrique.

9. Outil à chocs selon la revendication 1, dans lequel le dispositif de commande (17) est spécifiquement configuré pour commander la mise en court-circuit d'enroulements du moteur électrique (12) afin de freiner le moteur électrique (12) et pour démarrer le moteur électrique (12) après la période prédéfinie.

10. Outil à chocs selon la revendication 1, dans lequel le nombre prédéfini de frappes inclut la valeur un.

11. Outil à chocs selon la revendication 1, dans lequel la période prédéfinie est corrélée positivement à la course de gâchette.

12. Outil à chocs selon la revendication 11, dans lequel la période prédéfinie est inférieure ou égale à 500 ms.
